(19) Europäisches Patentamt
European Patent Office
Office européen des brevets

(11) **EP 4 629 575 A1**

(12) **EUROPEAN PATENT APPLICATION**
published in accordance with Art. 153(4) EPC

(43) Date of publication:
**08.10.2025 Bulletin 2025/41**

(21) Application number: **22966947.8**

(22) Date of filing: **02.12.2022**

(51) International Patent Classification (IPC):
**H04L 27/00** (2006.01)

(52) Cooperative Patent Classification (CPC):
**H04L 27/00**

(86) International application number:
**PCT/CN2022/136204**

(87) International publication number:
**WO 2024/113359 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**
(72) Inventors:
• **HAN, Tao**
  **Dongguan, Guangdong 523860 (CN)**
• **ZHU, Xiao**
  **Dongguan, Guangdong 523860 (CN)**
• **ZHONG, Yi**
  **Dongguan, Guangdong 523860 (CN)**
• **LI, Yapu**
  **Dongguan, Guangdong 523860 (CN)**
• **LUO, Chaoming**
  **Dongguan, Guangdong 523860 (CN)**

(74) Representative: **Mewburn Ellis LLP**
**Aurora Building**
**Counterslip**
**Bristol BS1 6BX (GB)**

(54) **WIRELESS COMMUNICATION METHOD, STATION DEVICE, AND ACCESS POINT DEVICE**

(57) A method for wireless communication, a station (STA), and an access point (AP) are provided. The method includes the following. An STA determines a target backoff value based on a count value of an orthogonal frequency division multiple access (OFDMA) backoff (OBO) counter, a target coefficient, and a first resource unit (RU) number, where the first RU number is the number of RUs allocated to the STA by an AP. The STA contends for a random access-RU (RA-RU) based on an OBO mechanism according to the target backoff value.

<u>200</u>

DETERMINE, BY STA, TARGET BACKOFF VALUE BASED ON COUNT VALUE OF OBO COUNTER, TARGET COEFFICIENT, AND FIRST RU NUMBER — S210

CONTEND FOR RA-RU BASED ON OBO MECHANISM ACCORDING TO TARGET BACKOFF VALUE — S220

**FIG. 4**

EP 4 629 575 A1

**Description**

TECHNICAL FIELD

Embodiments of the disclosure relate to the field of communication, and more particularly, to a method for wireless communication, a station (STA), and an access point (AP).

BACKGROUND

In the related art, stations (STAs) may contend for a random access resource unit(s) (RA-RU(s)) based on an uplink (UL) orthogonal frequency division multiple access (OFDMA)-based random access (UORA) mechanism, to transmit an UL physical layer protocol data unit (PPDU) to an access point (AP).
In a scenario in which STAs are densely distributed, the probability for an STA to contend successfully for an RA-RU and successfully transmit an UL PPDU to the AP is low. In this case, how the STA performs random access to increase the probability of successful access is an urgent issue that needs to be solved.

SUMMARY

The disclosure provides a method for wireless communication, a station (STA), and an access point (AP), which are beneficial to increasing the probability of successful random access of the STA.
In a first aspect, a method for wireless communication is provided. The method includes the following. An STA determines a target backoff value based on a count value of an orthogonal frequency division multiple access (OFDMA) backoff (OBO) counter, a target coefficient, and a first resource unit (RU) number, where the first RU number is the number of RUs allocated to the STA by an AP. The STA contends for a random access-RU (RA-RU) based on an OBO mechanism according to the target backoff value.
In a second aspect, a method for wireless communication is provided. The method includes the following. An AP transmits first information to an STA, where the first information is used for determining a target coefficient, and the target coefficient is used for determining a target backoff value for contending for an RA-RU based on an OBO mechanism.
In a third aspect, a terminal device is provided. The terminal device is configured to perform the method described above in the first aspect or various implementations of the first aspect. Specifically, the terminal device includes functional modules for performing the method in the first aspect or various implementations of the first aspect.
In a fourth aspect, a network device is provided. The network device is configured to perform the method described above in the second aspect or various implementations of the second aspect. Specifically, the network device includes functional modules for performing the method in the second aspect or various implementations of the second aspect.
In a fifth aspect, a terminal device is provided. The terminal device includes a processor and a memory. The memory is configured to store computer programs. The processor is configured to invoke and execute the computer programs stored in the memory, so as to perform the method described above in the first aspect or various implementations of the first aspect.
In a sixth aspect, a network device is provided. The network device includes a processor and a memory. The memory is configured to store computer programs. The processor is configured to invoke and execute computer programs stored in the memory, so as to perform the method described above in the second aspect or various implementations of the second aspect.
In a seventh aspect, a chip is provided. The chip is configured to implement the method in any one of the first aspect to the second aspect or in various implementations thereof. Specifically, the chip includes a processor. The processor is configured to invoke and execute computer programs from a memory, to cause a device equipped with the chip to perform the method described above in any one of the foregoing first aspect or the second aspect or in various implementations thereof.
In an eighth aspect, a computer-readable storage medium is provided. The computer-readable storage medium is configured to store computer programs which are operable with a computer to perform the method described above in any one of the first aspect or the second aspect or in various implementations thereof.
In a ninth aspect, a computer program product is provided. The computer program includes computer program instructions which are operable with a computer to perform the method in any one of the first aspect or the second aspect or in various implementations thereof.
In a tenth aspect, a computer program is provided. The computer program, when executed by a computer, is operable with the computer to perform the method in any one of the first aspect or the second aspect or in various implementations thereof.
With the technical solution, the STA can determine the target backoff value for RA-RU contention based on the target coefficient, that is, the STA can be controlled based on the target coefficient to contend for an RA-RU at an appropriate step size, so that the probability of RA-RU access can be increased or decreased according to the target coefficient, which can alleviate collision between STAs, thereby improving a success rate of random access.

BRIEF DESCRIPTION OF THE DRAWINGS

FIG. 1 is a schematic architectural diagram of a communication system provided in embodiments of the disclosure.

FIG. 2 is a schematic diagram illustrating a format of an uplink (UL) orthogonal frequency division multiple access (OFDMA)-based random access (UORA) parameter set element.

FIG. 3 is a simulation diagram illustrating probabilities for a station (STA) to contend successfully for a resource unit (RU) and successfully complete UL transmission when the numbers of STAs are 20, 40, 60, 80, and 100.

FIG. 4 is a schematic flowchart of a method 200 for wireless communication according to embodiments of the disclosure.

FIG. 5 is a schematic diagram illustrating a format of a common information field provided in embodiments of the disclosure.

FIG. 6 is a schematic diagram illustrating a format of a user information field provided in embodiments of the disclosure.

FIG. 7 is a schematic diagram illustrating a random access procedure according to an embodiment of the disclosure.

FIG. 8 is another schematic diagram illustrating a format of a common information field provided in embodiments of the disclosure.

FIG. 9 is another schematic diagram illustrating a format of a user information field provided in embodiments of the disclosure.

FIG. 10 is a schematic diagram illustrating a random access procedure according to another embodiment of the disclosure.

FIG. 11 illustrates an execution flow of an OFDMA backoff (OBO) mechanism provided in embodiments of the disclosure.

FIG. 12 and FIG. 13 each are a simulation diagram illustrating comparison between an STA success rate under a UORA mechanism according to embodiments of the disclosure and an STA success rate under an existing UORA mechanism.

FIG. 14 is a schematic block diagram of an STA according to embodiments of the disclosure.

FIG. 15 is a schematic block diagram of an access point (AP) according to embodiments of the disclosure.

FIG. 16 is a schematic block diagram of a communication device according to embodiments of the disclosure.

FIG. 17 is a schematic block diagram of a chip according to embodiments of the disclosure.

FIG. 18 is a schematic block diagram of a communication system according to embodiments of the disclosure.

DETAILED DESCRIPTION

The following will describe technical solutions of embodiments of the disclosure with reference to the accompanying drawings in embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The technical solutions of the embodiments of the disclosure may be applied to various communication systems, for example, wireless local area network (WLAN), wireless fidelity (Wi-Fi), or other communication systems.

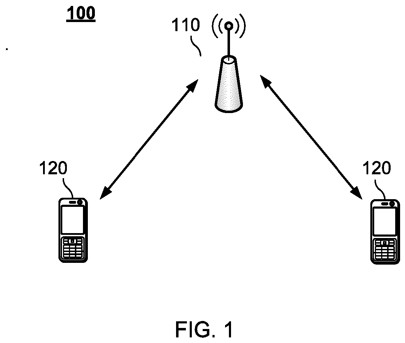

Exemplarily, a communication system 100 to which embodiments of the disclosure are applied is illustrated in FIG. 1. The communication system 100 may include an access point (AP) 110 and a station (STA) 120 for accessing a network via the AP 110.

In some scenarios, the AP 110 may be referred to as an AP STA, that is, the AP 110 is also a type of STA in some sense.

In some scenarios, the STA 120 may be referred to as a non-AP STA.

Communication in the communication system 100 may include: communication between an AP and a non-AP STA, or communication between non-AP STAs, or communication between an STA and a peer STA. The peer STA may refer to a device for performing peer-to-peer communication with an STA. For example, the peer STA may be an AP or a non-AP STA.

The AP 110 may be used as a bridge for connecting a wired network and a wireless network. The AP 110 is mainly used for connecting various wireless network clients together and then connecting the wireless network to an Ethernet. The AP 110 may be a terminal device (for example, a mobile phone) having a Wi-Fi chip or a network device (for example, a router).

It may be understood that, a role of the STA 120 in the communication system is not absolute. For example, in some scenarios, if a mobile phone is connected to a router, the mobile phone is a non-AP STA. If the mobile phone is a hotspot for another mobile phone, the mobile phone serves as an AP.

The AP and the non-AP STA may be devices applied to vehicle to everything (V2X); internet of things (IoT) nodes, sensors, etc. in IoT; smart cameras, smart remote controls, smart water meters and electricity meters, etc. in smart home; sensors in smart city, etc.

In some embodiments, the non-AP STA may be a device that supports 802.11be standards. The non-AP STA may also be a device that supports various current and future 802.11 WLAN standards, such as 802.11ax, 802.11ac, 802.11n, 802.11g, 802.11b, 802.11a, etc.

In some embodiments, the AP may be a device that supports 802.11be standards. The AP may also be a device that supports various current and future 802.11 WLAN standards, such as 802.11ax, 802.11ac, 802.11n, 802.11g, 802.11b, 802.11a, etc.

In some embodiments, the STA may be a device supporting WLAN/Wi-Fi technology, such as a mobile phone, a tablet (pad), a computer, a virtual reality (VR) device, an augmented reality (AR) device, a wireless device in industrial control, a set-top box, a wireless device in self-driving, an in-vehicle communication device, a wireless device in remote medicine, a wireless device in smart grid, a wireless device in transportation safety, a wireless device in smart city or a wireless device in smart home, an in-vehicle communication device, a wireless communication chip/application specific integrated circuit (ASIC)/system-on-chip (SOC), etc.

A frequency band supported by WLAN may include, but is not limited to, a low frequency band (2.4 Giga Hertz (GHz), 5 GHz, and 6 GHz), and a high frequency band (60 GHz).

FIG. 1 exemplarily illustrates one AP STA and two non-AP STAs. Optionally, the communication system 100 may include multiple AP STAs and other quantities of non-AP STAs, which is not limited in embodiments of the disclosure.

It may be understood that, a device having communication functions in a network/system in embodiments of the disclosure may be referred to as a communication device. Taking the communication system 100 illustrated in FIG. 1 as an example, the communication device may include the AP 110 and the STA 120 that have communication functions, where the AP 110 and the STA 120 may be the specific devices described above, and will not be described again herein. The communication device may further include other devices in the communication system 100, such as a network controller, a gateway, and other network entities, and embodiments of the disclosure are not limited in this regard.

It may be understood that, the terms "system" and "network" herein are usually used interchangeably throughout this disclosure. The term "and/or" herein only describes an association between associated objects, which means that there may be three relationships. For example, *A* and/or *B* may mean *A* alone, both *A* and *B* exist, and *B* alone. In addition, the character "/" herein generally indicates that the associated objects are in an "or" relationship.

It may be understood that, "indication" referred to in embodiments of the disclosure may be a direct indication, may be an indirect indication, or may mean that there is an association. For example, *A* indicates *B* may mean that *A* directly indicates *B,* for instance, *B* may be obtained according to *A;* may mean that *A* indirectly indicates *B,* for instance, *A* indicates *C,* and *B* may be obtained according to *C;* or may mean that that there is an association between *A* and *B.*

In the elaboration of embodiments of the disclosure, the term "correspondence" may mean that there is a direct or indirect correspondence between the two, or may mean that there is an association between the two, or may mean a relationship of indicating and indicated or configuring and configured, etc.

In embodiments of the disclosure, the "pre-defined" may be implemented by pre-storing a corresponding code or table in a device (for example, including the AP and the STA) or in other manners that can be used for indicating related information, and the disclosure is not limited in this regard. For example, the "pre-defined" may mean defined in a protocol.

In order to facilitate understanding of technical solutions of embodiments of the disclosure, related terms of the disclosure will be described below.

Association identifier (AID): used for identifying a terminal associated with an AP.

Medium access control (MAC): an abbreviation for MAC address.

Transmission opportunity (TXOP): refers to a period of time in which a terminal having the TXOP may initiate one or more transmissions.

Burst: generally refers to a short period of time in which one or more signals will be transmitted.

Burst group: refers to a group of one or more bursts, and bursts in the same burst group generally have some common features.

To facilitate understanding of embodiments of the disclosure, uplink (UL) orthogonal frequency division multiple access (OFDM)-based random access (UORA) related to the embodiments of the disclosure will be described.

For example, a specific UORA procedure may include the following steps.

Step 1, an AP transmits a UORA parameter set element to an STA.

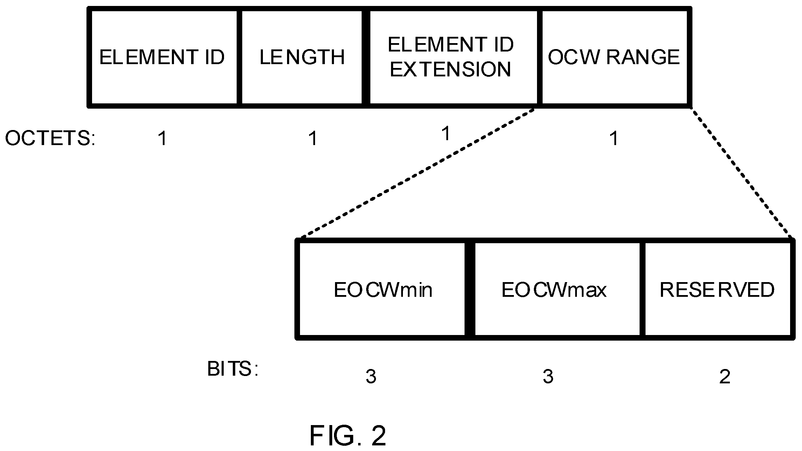

For example, the AP may include the UORA parameter set element in a management frame that the AP transmits, where the management frame may be a beacon frame, a probe response, or a (re)association response frame. The AP shall indicate a range of an OFDMA contention window (OCW) in the UORA parameter set element, in order for the STA to initiate random access following a trigger frame. FIG. 2 is a schematic diagram illustrating a format of a UORA parameter set element.

An EOCWmin field indicates the minimum value of the OCW for initial high efficiency (HE) trigger-based (TB) physical layer protocol data unit (PPDU) transmission using UORA. An *OCWmin* parameter can be used by the STA either for initial transmission or transmission following a successful HE TB PPDU transmission, where *OCWmin* is derived according to the following formula:

$$OCWmin = 2^{EOCWmin} - 1$$

where *EOCWmin* is the value of the EOCWmin field.

An EOCWmax field indicates the maximum value of the OCW for UORA. An *OCWmax* parameter can be used by the STA for retransmission attempt of UORA, where *OCWmax* can be derived according to the following formula:

$$OCWmax = 2^{EOCWmax} - 1$$

where *EOCWmax* is the value of the EOCWmax field.

Step 2, the STA receives the UORA parameter set element transmitted by the AP, and initializes the OCW and an OFDMA backoff (OBO) counter.

Specifically, the STA shall maintain an internal OCW and an internal OBO counter. OCW is an integer in the range *OCWmin* to *OCWmax,* where *OCWmin* and *OCWmax* are defined by *dot11OCWmin* and *dot11OCWmax*. A non-AP HE STA shall update *dot11OCWmin* and *dot11OCWmax* from an UORA parameter set element within an interval of time equal to one beacon interval after receiving an updated UORA parameter set element carried in a beacon, a probe response, or a (re)association response frame transmitted by an associated AP of the non-AP HE STA.

An unassociated non-AP STA that has not received an UORA parameter set element from an AP with which the unassociated non-AP STA intends to communicate shall use default OCW values.

Each time a non-AP HE STA associates with a different AP and before initial attempt of random access resource unit (RA-RU) towards the AP, the non-AP STA shall set the value of OCW to the *OCWmin* value and shall initialize an OBO counter of the non-AP HE STA to be in the range 0 to OCW.

Step 3, the AP transmits a trigger frame.

When performing UORA transmission, the AP transmits the trigger frame to multiple STAs, to indicate an RA-RU size and the total number of RA-RUs, where the RA-RU size and the total number of RA-RUs are indicated respectively by an RU allocation field and a number of RA-RU field in a user information field.

Step 4, the STA contends for an RA-RU based on an OBO mechanism.

Each associated STA and unassociated STA contend for an RU based on the OBO mechanism according to the RA-RU size and total number of RA-RUs indicated by the trigger frame.

Specifically, the OBO mechanism is as follows. Each STA subtracts the total number $N_{RU}$ of RA-RUs from an initial value of an OBO counter maintained by the STA, to obtain a backoff value.

Case 1: if the value obtained through subtraction (i. e. the backoff value) in this round is less than or equal to 0, then the STA may randomly select and occupy an RA-RU;

Case 1-1: if various STAs do not select the same RA-RU at the same time, i. e. no collision occurs between the STAs, then each STA successfully participates in UL TB PPDU transmission in this round, resets a current OCW to be *OCWmin,* and selects a random integer from 0 ~ OCW as the initial value of the OBO counter for the next round of UORA;

Case 1-2: if various STAs select the same RA-RU at the same time, i. e. collision occurs between the STAs, then all the STAs fail to participate in UL TB PPDU transmission in this round, and these STAs each need to update an OCW to min (2 × OCW + 1, OCWmax), and select a random integer from 0 ~ OCW as the value of the OBO counter.

Case 2: if the value obtained through subtraction (i. e. the backoff value) in this round is greater than 0, the STA sets the OBO counter to be the value obtained through subtraction, which is used for the next round of UORA. The STA does not occupy any RA-RU, and does not participate in UL TB PPDU transmission in this round.

Step 5, the STA performs the next round of UORA contention.

For example, Step 3 and Step 4 are repeated.

However, in a scenario in which there are multiple STAs that are densely distributed, collision may occur if the foregoing UORA mechanism is adopted, that is, multiple STAs may contend for the same RU, thus resulting in failure of UL transmission of the STAs.

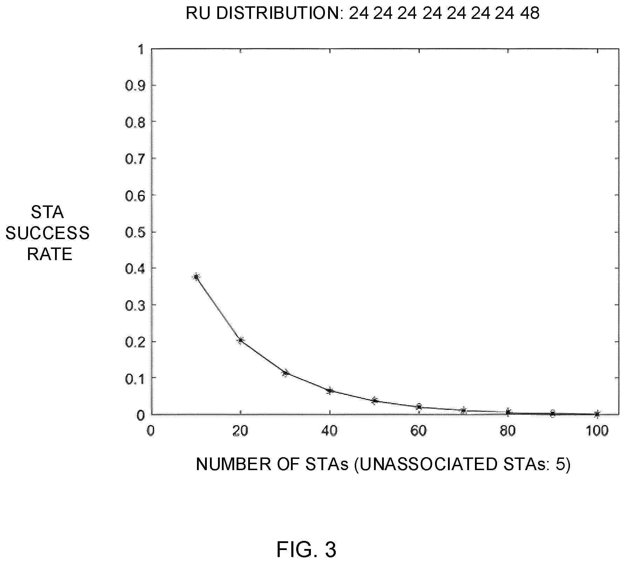

FIG. 3 is a simulation diagram illustrating probabilities for an STA to contend successfully for an RU and successfully complete UL transmission when the numbers of STAs are 20, 40, 60, 80, and 100. As can be seen from FIG. 3, if the number of STAs is close to 40, the probability for an STA to successfully complete UL transmission is lower than 10%. As the number of STAs increases to 100, the probability of success is close to 0. Therefore, how to perform random access to increase the probability of successful access is an urgent issue that needs to be solved.

In order for better understanding of technical solutions of embodiments of the disclosure, the technical solutions of the disclosure will be described in detail below in connection with embodiments. The following related art as an optional scheme can be arbitrarily combined with the technical solutions of embodiments of the disclosure, which shall all belong to the protection scope of embodiments of the disclosure. Embodiments of the disclosure include at least some of the following.

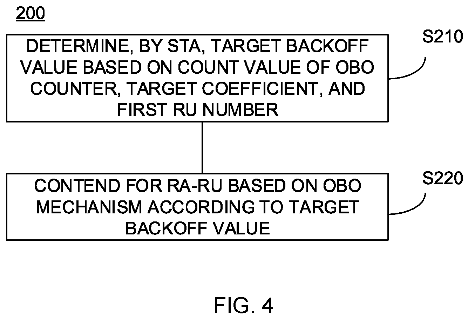

FIG. 4 is a schematic flowchart of a method 200 for wireless communication according to embodiments of the disclosure. The method 200 may be performed by the terminal device in the communication system illustrated in FIG. 1. As illustrated in FIG. 4, the method 200 includes the following.

S210, an STA determines a target backoff value based on a count value of an OBO counter, a target coefficient, and a first RU number (that is, first RU quantity), where the first RU number is the number of RUs allocated to the STA by an AP.

S220, the STA contends for an RA-RU based on an OBO mechanism according to the target backoff value.

In some embodiments, the first RU number may be indicated by a number of RA-RU field in a user information field.

In some embodiments, the target coefficient is also referred to as an adaptation factor. The target coefficient can be adaptively adjusted according to the number of STAs participating in UORA, that is, the target coefficient depends on the number of STAs participating in UORS. Thus, the STA can contend for an RU by using an appropriate backoff value, which can alleviate collision in a scenario where STAs are densely distributed, thereby improving a success rate of access.

In some embodiments, the STA may be an associated STA of the AP, or may be an unassociated STA of the AP.

In some embodiments, only an associated STA can contend for an RU in the manner in embodiments of the disclosure, while an unassociated STA can contend for an RU based on an existing UORA mechanism, which is beneficial to ensuring that an associated STA has higher priority to use an RU than an unassociated STA, thereby increasing the probability of successful access of an associated STA.

In other embodiments, both an associated STA and an unassociated STA can contend for RUs in the manner described in embodiments of the disclosure.

In some embodiments, the target coefficient includes a first coefficient (denoted as $\alpha$) and/or a second coefficient (denoted as $\beta$). The first coefficient is used for controlling the number of RUs used for calculating the target backoff value, and the second coefficient is used for controlling a target count value used for calculating the target backoff value.

In some embodiments, the first coefficient and the first RU number (i. e. $N_{RU}$) are used for determining a target RU number (that is, target RU quantity), and the target backoff value is determined according to the count value of the OBO counter and the target RU number.

For example, the target backoff value (denoted as $N_{Back\text{-}off}$) is equal to a value obtained by subtracting the target RU number from the count value of the OBO counter.

Exemplarily, the target RU number is equal to a product of the first coefficient and the first RU number.

That is, $N_{Back\text{-}off} = N_{counter} - \alpha \times N_{RU}$, where $N_{counter}$ represents the count value of the OBO counter.

In other embodiments, the second coefficient and the count value of the OBO counter are used for determining a target count value, and the target backoff value is determined according to the target count value and the first RU number.

For example, the target backoff value is equal to a value obtained by subtracting the first RU number from the target count value.

Exemplarily, the target count value is equal to a product of the second coefficient and the count value of the OBO counter.

That is, $N_{Back-off} = \beta \times N_{counter} - N_{RU}$, where $N_{counter}$ represents the count value of the OBO counter.

The manner for obtaining the target coefficient will be described below with reference to embodiments.

Embodiment 1: The target coefficient is obtained from the AP.

That is, the STA may obtain the first coefficient and/or the second coefficient from the AP.

It may be understood that, in the disclosure, there is no limitation on the manner for the AP to indicate the target coefficient to the STA, for example, the target coefficient may be indicated before the STA initiates random access.

Optionally, the target coefficient may be determined by the AP according to the number of STAs participating in UORA.

Optionally, the number of STAs participating in UORA may be the number of associated STAs participating in UORA, or may be the number of associated STAs participating in UORA and the number of unassociated STAs participating in UORA.

In some embodiments, the target coefficient is obtained via a trigger frame, i. e., the first coefficient and/or the second coefficient may be obtained via the trigger frame.

Optionally, the trigger frame may be used for configuring information, such as an RA-RU size and the number of RA-RUs, for the STA.

In some embodiments, a target coefficient field may be added in the trigger frame, so as to indicate the target coefficient.

Optionally, a reserved field in the trigger frame is used as the target coefficient field.

In some embodiments, a first coefficient field and/or a second coefficient field may be added in the trigger frame, where the first coefficient field indicates the first coefficient, and the second coefficient field indicates the second coefficient.

In some embodiments, the target coefficient is carried in a common information field in the trigger frame.

In some embodiments, the common information field in the trigger frame includes a target coefficient field, and the target coefficient field indicates the target coefficient.

For example, the common information field in the trigger frame includes a first coefficient field and/or a second coefficient field, where the first coefficient field indicates the first coefficient, and the second coefficient field indicates the second coefficient.

In this case, the first coefficient and/or the second coefficient indicated by the common information field is applicable to all STAs participating in UORA.

In some embodiments, the number of bits occupied by the first coefficient field may be determined according to the number of candidate values for the first coefficient.

For example, if there are two candidate values for the first coefficient, for example, including 0.6 and 0.8, the first coefficient field may occupy 1 bit.

For another example, if there are four candidate values for the first coefficient, for example, including 0.5, 0.6, 0.7, and 0.8, the first coefficient field may occupy 2 bits.

In some embodiments, the number of bits occupied by the second coefficient field may be determined according to the number of candidate values for the second coefficient.

For example, if there are two candidate values for the second coefficient, for example, including 1.1 and 1.2, the second coefficient field may occupy 1 bit.

For another example, if there are four candidate values for the second coefficient, for example, including 1.1, 1.2, 1.3, and 1.4, the second coefficient field may occupy 2 bits.

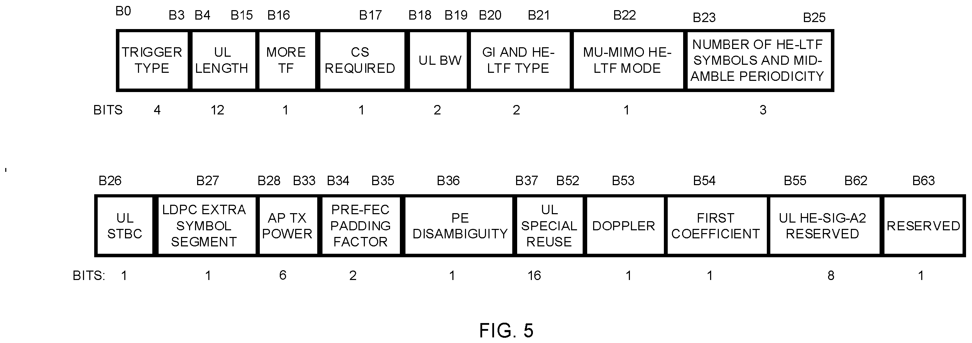

FIG. 5 is a schematic diagram illustrating a format of a common information field provided in embodiments of the disclosure. As illustrated in FIG. 5, the common information field may include a first coefficient field, and the number of bits occupied by the first coefficient field may be determined according to the number of candidate values for the first coefficient.

As illustrated in FIG. 5, the common information field can further include at least one of the following fields: trigger type (occupying 4 bits), UL length (occupying 12 bits), more trigger frames (TF) (occupying 1 bit), carrier sense (CS) required (occupying 1 bit), UL bandwidth (BW) (occupying 2 bits), guard interval (GI) and HE long training field (HE-LTF) type (occupying 2 bits), and multi-user multiple in multiple out (MU-MIMO) HE-LTF mode (occupying 1 bit), number of HE-LTF symbols and mid-amble periodicity (occupying 3 bits), UL space time block code (STBC) (occupying 1 bit), low-density parity check (LDPC) extra symbol segment (occupying 1 bit), AP transmit (TX) power (occupying 6 bits), pre-forward error correction (Pre-FEC) padding factor (occupying 2 bits), packet extension (PE) disambiguity (occupying 1 bit), UL special reuse (occupying 16 bits), doppler (occupying 1 bit), UL HE-signal (SIG)-A2 reserved (occupying 8 bits), or reserved (occupying 1 bit).

It may be understood that, in FIG. 5, the first coefficient field exemplarily occupies 1 bit, but the disclosure is not limited thereto. If there are more candidate values for the first coefficient, the first coefficient field may occupy another number of bits. Alternatively, the common information field may further include a second coefficient field, or may include only the second coefficient field without including the first coefficient field. The disclosure is not limited in this regard.

It may be noted that, in FIG. 5, the first coefficient is indicated exemplarily by only one bit in the UL HE-SIG-A2 reserved field. In other embodiments, the first coefficient may be indicated by the reserved field. Alternatively, if more bits are required to indicate the target coefficient, the target coefficient may be indicated by more bits in the UL HE-SIG-A2 reserved field, or may be indicated by the UL HE-SIG-A2 reserved field and the reserved field.

In some embodiments, the target coefficient is carried in a user information field in the trigger frame.

In this case, the target coefficient indicated by the user information field is applicable to an STA corresponding to the user information field. That is, the target coefficient is indicated separately for each STA, and in this case, target coefficients corresponding to STAs may be the same or different.

In some embodiments, some or all of user information fields in the trigger frame include a target coefficient field, where the target coefficient field indicates a target coefficient applicable to an STA corresponding to the user information field.

For example, only a user information field corresponding to an associated STA in the trigger frame includes a target coefficient field.

For another example, a user information field corresponding to an associated STA and a user information field corresponding to an unassociated STA in the trigger frame both include a target coefficient field.

Exemplarily, the trigger frame includes two user information fields, and each user information field includes a target coefficient field, where the target coefficient field indicates the first coefficient and/or the second coefficient. For example, in the 1st user information field, AID=0, which indicates that the user information field is used for allocating one or more contiguous RA-RUs to an associated STA. In the 2nd user information field, AID=2045, which indicates that the user information field is used for allocating one or more contiguous RA-RUs to an unassociated STA.

Optionally, the target coefficient field includes a first coefficient field and/or a second coefficient field, where the first coefficient field indicates the first coefficient, and the second coefficient field indicates the second coefficient.

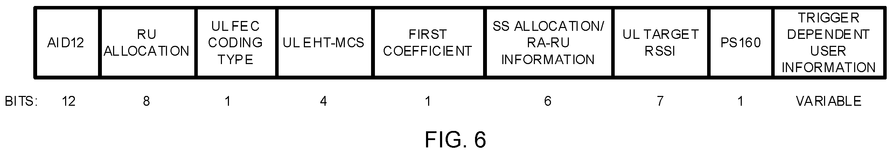

FIG. 6 is a schematic diagram illustrating a format of a user information field provided in embodiments of the disclosure. As illustrated in FIG. 6, the user information field may include a first coefficient field, and the number of bits occupied by the first coefficient field may be determined according to the number of candidate values for the first coefficient.

As illustrated in FIG. 6, the user information field can further include at least one of the following fields: AID12 (occupying 12 bits), RU allocation (occupying 8 bits), UL FEC coding type (occupying 1 bit), UL HE modulation and coding scheme (HE-MCS) (occupying 4 bits), spatial streams (SS) allocation/RA-RU information (occupying 6 bits), UL target received signal strength indicator (RSSI) (occupying 7 bits), primary/secondary 160 megahertz (MHz) (PS160) (occupying 1 bit), or trigger dependent user information (variable).

It may be understood that, in FIG. 6, the first coefficient field exemplarily occupies 1 bit, but the disclosure is not limited thereto. If there are more candidate values for the first coefficient, the first coefficient field may occupy another number of bits. Alternatively, the user information field can further include a second coefficient field. Alternatively, the user information field can include only the second coefficient field without including the first coefficient field. The disclosure is not limited in this regard.

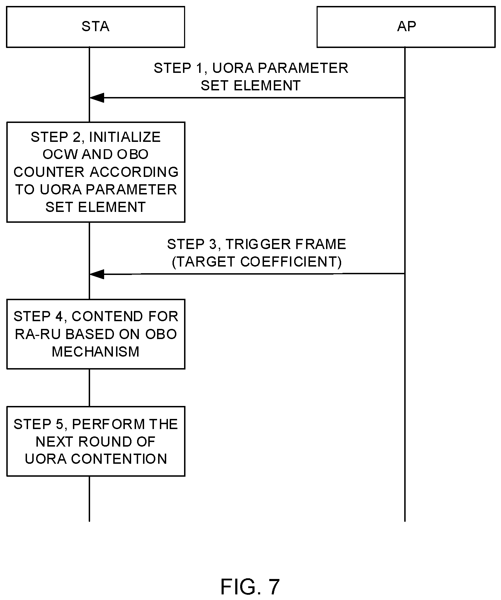

A random access procedure based on Embodiment 1 will be described below with reference to FIG. 7. As illustrated in FIG. 7, the random access procedure may include the following steps.

Step 1, an AP transmits a UORA parameter set element to an STA.

For example, the AP may include the UORA parameter set element in a trigger frame that the AP transmits. The AP shall indicate a range of an OCW in the UORA parameter set element, in order for the STA to initiate random access following the trigger frame.

Step 2, the STA receives the UORA parameter set element transmitted by the AP, and initializes the OCW and an OBO counter.

Step 3, the AP transmits a trigger frame.

When performing UORA transmission, the AP transmits the trigger frame to multiple STAs, to indicate an RA-RU size and the number of RA-RUs, where the RA-RU size and the number of RA-RUs are indicated respectively by an RU allocation field and a number of RA-RU field in a user information field.

The trigger frame includes a target coefficient field, for example, a first coefficient field and/or a second coefficient field, to indicate the first coefficient and/or the second coefficient.

Step 4, the STA contends for an RA-RU based on an OBO mechanism.

For example, an STA participating in UL UORA contends for an RU based on the OBO mechanism according to the RA-RU size, the total number of RA-RUs, and the target coefficient indicated by the trigger frame.

For example, the STA subtracts $\alpha\times$ the total number $N_{RU}$ of RA-RUs from an initial value of an OBO counter maintained by the STA, to obtain a target backoff value.

Case 1: if the value obtained through subtraction (i. e. the target backoff value) in this round is less than or equal to 0, the STA may randomly select and occupy an RA-RU;

Case 1-1: if various STAs do not select the same RA-RU at the same time, i. e. no collision occurs between the STAs, then each STA successfully participates in UL TB PPDU transmission in this round, resets a current OCW to be *OCWmin,* and selects a random integer from 0 ~ OCW as the initial value of the OBO counter for the next round of UORA.

Case 1-2: if various STAs select the same RA-RU at the same time, i. e. collision occurs between the STAs, then some of the STAs fail to participate in UL TB PPDU transmission in this round, and these STAs need to update an OCW to min (2 × OCW + 1, *OCWmax*), and select a random integer from 0 ~ OCW as the value of the OBO counter.

When an acknowledgement (ACK) mechanism exists, if an ACK is received by the STA from the AP, it is considered that no collision occurs between the STAs; and if no ACK is received by the STA, it is considered that collision occurs.

Case 2: if the value obtained through subtraction (i. e. the target backoff value) in this round is greater than 0, the STA sets the OBO counter to be the target backoff value for the next round of UORA. The STA does not occupy any RA-RU, and does not participate in UL TB PPDU transmission in this round.

Step 5, the STA performs the next round of UORA contention.

For example, Step 3 and Step 4 are repeated.

Embodiment 2: the target coefficient is determined by the STA.

In some embodiments, the target coefficient may be determined according to a target number of STAs participating in UL UORA.

Optionally, the target number includes associated STAs participating in UORA; or the target number includes unassociated STAs and associated STAs participating in UORA.

In some embodiments, the target number is obtained from the AP.

In some embodiments, the AP can know the number of associated STAs of the AP, but does not know the number of unassociated STAs. Considering that the total number of associated STAs is far greater than the total number of unassociated STAs in actual basic service set (BSS) network transmission, the total number of unassociated STAs and associated STAs participating in UORA can be approximately determined by rounding up the total number of associated STAs at a certain granularity. For example, if the total number of associated STAs in the current transmission is $N_{STA,\,association}$ = 25, and $N_{STA,}$ *granularity* = 10, then the AP obtains $N_{STA,\,total}$ = 30 through calculation. The granularity $N_{STA,\,granularity}$ for the total number of STAs may be determined by the AP according to the total number of associated STAs of the AP.

It may be understood that, in the disclosure, there is no limitation on the manner for the AP to indicate the target number to the STA, for example, the target number may be indicated before the STA initiates random access.

In some embodiments, the target number is obtained via a trigger frame.

For example, a target number field may be added in the trigger frame to indicate the target number.

Optionally, a reserved field in the trigger frame is used as the target number field.

In some embodiments, the target number is carried in a common information field in the trigger frame.

For example, the common information field in the trigger frame includes a target number field, where the target number field indicates the target number.

In some embodiments, the number of bits occupied by the target number field may be determined according to the number of candidate values for the target number.

For example, if the candidate values for the total number of STAs include 20, 30, 40, 50, 60, 70, 80, and 90, the target number field may occupy 3 bits.

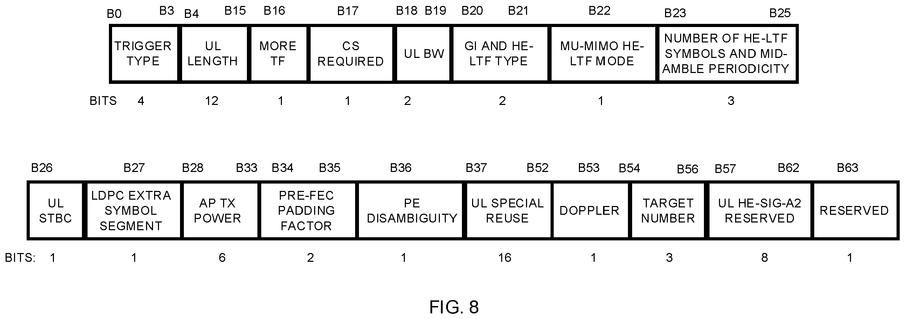

FIG. 8 is a schematic diagram illustrating a format of a common information field provided in embodiments of the disclosure. As illustrated in FIG. 8, the common information field may include a target number field, and the number of bits occupied by the target number field may be determined according to the number of candidate values of the target number. For other fields in the format illustrated in FIG. 8, reference can be made to related elaborations of FIG. 5, which are not described again herein for brevity.

It may be understood that, in FIG. 8, the target number field exemplarily occupies 3 bits, but the disclosure is not limited thereto. If there are more candidate values for the target number, the target number field may occupy a larger number of bits. Alternatively, if there are fewer candidate values for the target number, the target number field may occupy a smaller number of bits. The disclosure is not limited in this regard.

In other embodiments, the target number is carried in a user information field in the trigger frame.

Optionally, some or all of user information fields in the trigger frame include a target number field, where the target number field indicates the target number.

For example, only a user information field corresponding to an associated STA in the trigger frame includes a target number field.

For another example, a user information field corresponding to an associated STA and a user information field corresponding to an unassociated STA in the trigger frame both include a target number field.

That is, the target number is carried in a user information field corresponding to an associated STA in the trigger frame. Alternatively, the target number is carried in a user information field corresponding to an associated STA and a user information field corresponding to an unassociated STA in the trigger frame.

As an embodiment, the trigger frame includes multiple first user information fields, STAs indicated by the multiple first user information fields are associated STAs, each of the multiple first user information fields includes a target number field, and the target number fields in the multiple first user information fields jointly indicate the target number.

Optionally, in the first user information field, AID=0.

For example, if the candidate values for the target number include 20, 40, 60, and 80, then 2 bits are required to indicate the target number. The trigger frame includes 4 user information fields. In the 1st user information field and the 2nd user information field, AID=0, which indicates that the user information field is used for allocating one or more contiguous RA-RUs to an associated STA. In the 3rd user information field and the 4th user information field, AID=2045, which indicates that the user information field is used for allocating one or more contiguous RA-RUs to an unassociated STA. In this case, the target number may be indicated jointly by the target number field in the 1st user information field and the target number field in the 2nd user information field, where each target number field may occupy 1 bit.

As another embodiment, the trigger frame includes multiple first user information fields and multiple second user information fields, STAs indicated by the multiple first user information fields are associated STAs, and STAs indicated by the multiple second user information fields are unassociated STAs. Each of the multiple first user information fields includes a target number field, and the target number fields in the multiple first user information fields jointly indicate the target number. Each of the multiple second user information fields includes a target number field, and the target number fields in the multiple second user information fields jointly indicate the target number.

Optionally, in the first user information field, AID = 0. In the second user information field, AID = 2045.

For example, if the candidate values for the target number include 20, 40, 60, and 80, 2 bits are required to indicate the target number. If the trigger frame includes 4 user information fields, in the 1st user information field and the 2nd user information field, AID=0, which indicates that the user information field is used for allocating one or more contiguous RA-RUs to an associated STA; in the 3rd user information field and the 4th user information field, AID=2045, which indicates that the user information field is used for allocating one or more contiguous RA-RUs to an unassociated STA. In this case, the target number may be indicated jointly by the target number field in the 1st user information field and the target number field in the 2nd user information field, and the target number may be indicated jointly by the target number field in the 3rd user information field and the target number field in the 4th user information field, where each target number field may occupy 1 bit.

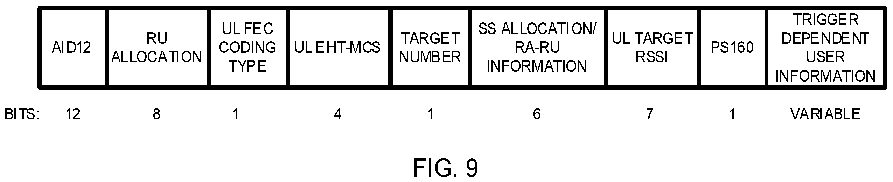

FIG. 9 is a schematic diagram illustrating a format of a user information field provided in embodiments of the disclosure. As illustrated in FIG. 9, the user information field may include a target number field, where the target number field may occupy 1 bit, and target number fields in multiple user information fields jointly indicate the target number. For other fields in the format illustrated in FIG. 9, reference can be made to related elaborations of FIG. 6, which are not described again herein for brevity.

In some embodiments, the target coefficient is determined by the STA according to the target number and history access result information. The history access result information may include the most recent one or more access information and/or history channel environment information (or referred to as channel condition information, or channel quality information).

By way of illustration rather than limitation, the history access result information includes but is not limited to at least one of: whether collision occurred in the most recent N UL transmissions, a probability of collisions occurred in the most recent M UL transmissions, or a probability that no collision occurred in the most recent K UL transmissions, where N, M, and K are positive integers.

Optionally, N may be pre-defined, or determined by the STA, or indicated by the AP.

Optionally, M may be pre-defined, or determined by the STA, or indicated by the AP.

Optionally, K may be pre-defined, or determined by the STA, or indicated by the AP.

In some embodiments, according to the history random access information and the target number, the STA can determine an adjustment direction and an adjustment amount of the first coefficient and/or an adjustment direction and an adjustment amount of the second coefficient.

For example, the adjustment direction of the first coefficient is to increase the first coefficient or to decrease the first coefficient. The adjustment direction of the second coefficient is to increase the second coefficient or to decrease the second coefficient.

As an example, if a first condition is satisfied, the value of the first coefficient is increased and/or the value of the second coefficient is decreased.

In some embodiments, the first condition may indicate that the channel environment for the STA is good, and therefore, the probability of collision between STAs is relatively low. In this case, the first coefficient may be increased and/or the second coefficient may be decreased, which increases the probability for the STA to access an RU, thereby improving a success rate of random access.

As an example, the first condition includes but is not limited to at least one of: no collision occurred in the most recent $N$ UL transmissions; the number of collisions occurred in the most recent $N$ UL transmissions is less than a first count threshold; the probability of collisions occurred in the most recent $M$ UL transmissions is less than a first probability threshold; or the probability that no collision occurred in the most recent $K$ UL transmissions is greater than a second probability threshold.

As an example, if a second condition is satisfied, the value of the first coefficient is decreased and/or the value of the second coefficient is increased.

In some embodiments, the second condition may indicate that the channel environment for the STA is relatively poor, and therefore, the probability of collision between STAs is relatively high. In this case, the first coefficient may be decreased and/or the second coefficient may be increased, which reduces the probability for the STA to access an RU, thereby reducing the probability of collision between STAs.

In some embodiments, the second condition includes at least one of: collision occurred in the most recent $N$ UL transmissions; the number of collisions occurred in the most recent $N$ UL transmissions is greater than a first count threshold; the probability of collisions occurred in the most recent $M$ UL transmissions is greater than a first probability threshold; or the probability that no collision occurred in the most recent $K$ UL transmissions is less than a second probability threshold.

Optionally, the first count threshold may be pre-defined, or determined by the STA, or indicated by the AP.

Optionally, the first probability threshold may be pre-defined, or determined by the STA, or indicated by the AP.

Optionally, the second probability threshold may be pre-defined, or determined by the STA, or indicated by the AP.

In some embodiments, the adjustment amount of the first coefficient is determined based on the target number.

For example, when it is determined to increase the first coefficient, the first coefficient after adjustment satisfies the following formula (1):

$$\alpha' = \alpha_1 + \frac{N_{sta}}{100 + N_{sta}} \times inc$$

$$\alpha = \min(\alpha', \alpha_{\max}) \qquad \text{formula (1)}$$

where $\alpha$ is the value of the first coefficient after adjustment, $\alpha_1$ is the value of the first coefficient before adjustment, $N_{sta}$ is the target number, $inc$ is a step size for adjusting the first coefficient, and $\alpha_{\max}$ is the maximum value of the first coefficient.

Optionally, $inc$ may be pre-defined, or determined by the STA, or indicated by the AP.

Optionally, $inc$ may be 0.1.

Optionally, $\alpha_{\max}$ may be pre-defined, or determined by the STA, or indicated by the AP.

In some embodiments, the adjustment amount of the first coefficient is determined according to the target number and the number of consecutive successful UL transmissions completed by the STA.

Optionally, when it is determined to decrease the first coefficient, the adjustment amount of the first coefficient is determined according to the target number and the number of consecutive successful UL transmissions completed by the STA.

For example, when it is determined to decrease the first coefficient, the first coefficient after adjustment satisfies the following formula (2):

$$\alpha' = \alpha_1 - \frac{200 + N_{sta}}{N_{sta}} \times dec^{n_s - 1}$$

$$\alpha = \min(\alpha', \alpha_{\max}) \qquad \text{formula (2)}$$

where $\alpha$ is the value of the first coefficient after adjustment, $\alpha_1$ is the value of the first coefficient before adjustment, $N_{sta}$ is the target number, dec is a step size for adjusting the first coefficient, $n_s$ is number of consecutive successful UL transmissions completed by the STA, and $\alpha_{\max}$ is the maximum value of the first coefficient.

Optionally, *dec* may be pre-defined, or determined by the STA, or indicated by the AP.

Optionally, if UL transmission of the STA fails, $n_s$ is cleared and counting is restarted.

Optionally, the STA may adjust the second coefficient in a manner similar to that for adjusting the first coefficient, and the difference lies in that adjustment directions of the two are opposite.

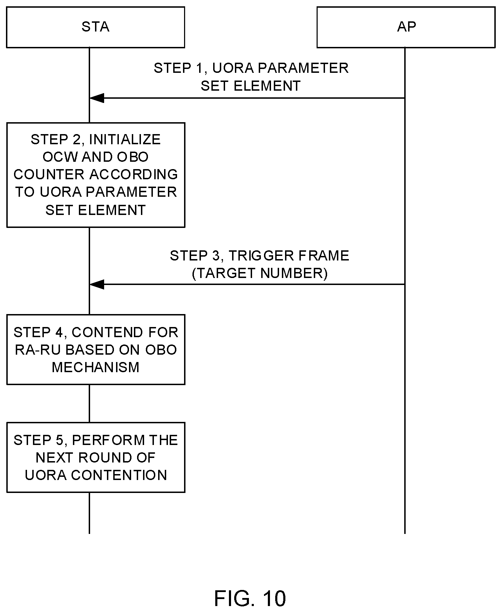

The random access procedure based on Embodiment 2 will be described below with reference to FIG. 10. As illustrated in FIG. 10, the random access procedure may include the following steps.

Step 1, an AP transmits a UORA parameter set element to an STA.

For example, the AP may include the UORA parameter set element in a trigger frame that the AP transmits. The AP may indicate a range of an OCW in the UORA parameter set element, in order for the STA to initiate random access following the trigger frame.

Step 2, the STA receives the UORA parameter set element transmitted by the AP, and initializes the OCW and an OBO counter.

Step 3, the AP transmits a trigger frame.

When performing UORA transmission, the AP transmits the trigger frame to multiple STAs, to indicate an RA-RU size and the number of RA-RUs, where the RA-RU size and the number of RA-RUs are indicated respectively by an RU allocation field and a number of RA-RU field in a user information field.

The trigger frame includes a target number field, which indicates the number of STAs participating in UL UORA.

Step 4, the STA contends for an RA-RU based on an OBO mechanism.

For example, an STA participating in UL UORA determines a target coefficient, for example, a first coefficient $\alpha$, according to a target number indicated by the trigger frame.

Further, the STA participating in UL UORA contends for an RU based on the OBO mechanism according to the RA-RU size, the total number of RA-RUs, and the target coefficient indicated by the trigger frame.

For example, the STA subtracts $\alpha \times N_{RU}$ from an initial value of an OBO counter maintained by the STA, to obtain a target backoff value. An initial value of $\alpha$ is set to be $\alpha_0$, for example, $\alpha_0 = 1$. $\alpha \in [\alpha_{min}, \alpha_{max}]$, where $\alpha_{min}$ and $\alpha_{max}$ may be pre-defined, or determined by the STA, or indicated by the AP. For example, $\alpha \in [0.1, 2]$.

Case 1: if the value obtained through subtraction (i. e. the target backoff value) in this round is less than or equal to 0, the STA may randomly select and occupy an RA-RU

Case 1-1: if the STAs do not select the same RA-RU at the same time, i. e. no collision occurs between the STAs, then each STA successfully participates in UL TB PPDU transmission in this round, resets a current OCW to be *OCWmin,* and selects a random integer from 0 ~ OCW as the initial value of the OBO counter for the next round of UORA.

For an STA that successfully participates in UL TB PPDU transmission in this round, it can be considered that the probability of collision between STAs is relatively low, and the channel environment is good, and accordingly, $\alpha$ can be increased, thereby increasing the probability of RA-RU access. For the increase amount of $\alpha$, a larger total number of STAs participating in the current UORA may correspond to a larger increase amount of $\alpha$, and the OBO procedure may be accelerated in a more aggressive manner, thereby improving the probability of success of UL transmission. After the STA successfully occupies an RA-RU and succeeds in transmission, a for the next round may be determined according to the foregoing formula (1).

Case 1-2: if the STAs select the same RA-RU at the same time, i. e. collision occurs between the STAs, then some of the STAs fail to participate in UL TB PPDU transmission in this round, and these STAs need to update an OCW to min (2 × OCW + 1, *OCWmax),* and select a random integer from 0 ~ OCW as the value of the OBO counter.

For an STA which fails to participate in UL TB PPDU transmission in this round, $\alpha$ can be decreased, and decrease of the target backoff value to 0 can be decelerated, thereby reducing the probability of RA-RU access. With regard to the decrease amount of $\alpha$, a larger total number of STAs participating in the current UORA leads to a higher probability of collision. In order to prevent $\alpha$ from decreasing too rapidly from an initial value to a minimum value, change of the value of $\alpha$ needs to be decelerated. If the STA has successfully completed UL TB PPDU transmission many times consecutively before the current collision, it indicates that the current collision is accidental, and accordingly, the value of $\alpha$ may not be decreased. If multiple STAs select the same RA-RU and collision occurs, the STA may update $\alpha$ for the next round according to formula (2).

Case 2: if the value obtained through subtraction (i. e. the target backoff value) in this round is greater than 0, the STA sets the OBO counter to be the target backoff value for the next round of UORA. The STA does not occupy any RA-RU, and does not participate in UL TB PPDU transmission in this round.

Step 5, the STA performs the next round of UORA contention.

For example, Step 3 and Step 4 are repeated.

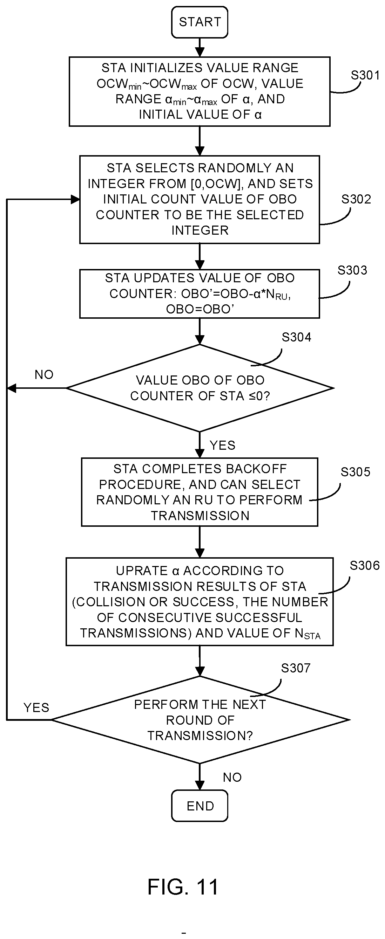

With reference to FIG. 11, the first coefficient is taken as an example of the target coefficient to describe an execution procedure of an OBO backoff mechanism provided in embodiments of the disclosure. As illustrated in FIG. 11, the procedure may include the following steps.

S301, the STA initializes *OCWmin* and *OCWmax,* the value range $[\alpha_{min}, \alpha_{max}]$ of $\alpha$, and an initial value of $\alpha$.

S302, the STA selects randomly an integer from [0, OCW], and sets an initial count value of an OBO counter to be

EP 4 629 575 A1

the selected integer.

S303, the STA updates a count value of the OBO counter maintained by the STA: OBO'=OBO-$\alpha$*$N_{RU}$,OBO=O-BO', where OBO' is an updated count value of the OBO counter, and OBO is a count value of the OBO counter before update.

S304, whether the value OBO of the OBO counter of the STA is less than or equal to 0 is determined.

If yes, S305 is performed; and if not, S302 is performed.

S305, the STA completes a backoff procedure, and can select randomly an RU to perform UL TB PPDU transmission.

S306, the STA updates $\alpha$ according to transmission results of the most recent N UL transmissions (e. g., collision or success, the number of consecutive successful transmissions, etc.) and the target number. For the specific manner for update, reference can be made to related elaborations in the foregoing embodiments, which are not described again herein for brevity.

S307, whether to perform the next round of transmission is determined.

If yes, step S302 is performed; otherwise, the procedure ends.

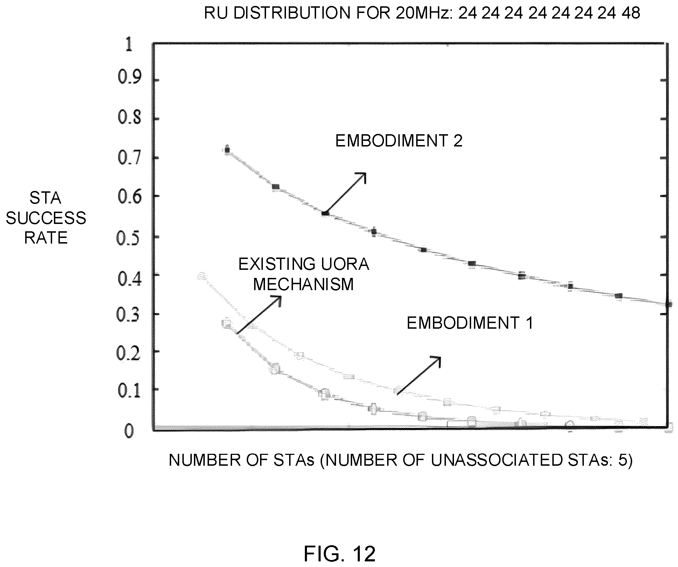

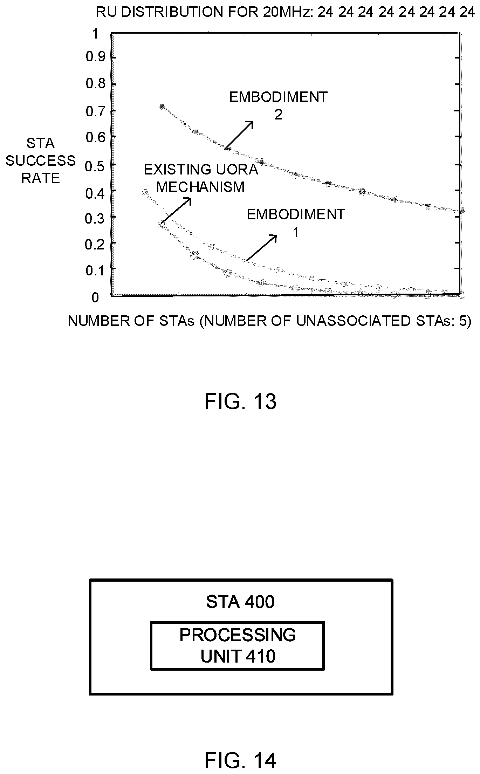

FIG. 12 and FIG. 13 each are a simulation diagram illustrating comparison between an STA success rate under Embodiment 1, an STA success rate under Embodiment 2, and an STA success rate under an existing UORA mechanism.

In the simulation diagrams of FIG. 12 and FIG. 13, it is assumed that: (i) the channel is ideal, that is, transmission fails only due to RA-RU collision; (ii) the AP allocates all RUs to the STAs in order for random access; (iii) the granularity for the total number of STAs is 1, that is, the AP knows the specific total number of STAs; (iv) all the STAs contend per round for RA-RUs of which the total number is $N_{RU}$, that is, the total number of STAs participating in contention per round remains unchanged. UL TB PPDUs transmitted by all the STAs have the same frame size and the same MCS. The simulation parameters are set as illustrated in Table 1.

Table 1

| Parameter | Value |
|---|---|
| Simulation time | 60 seconds (s) |
| (*OCWmin, OCWmax*) | (7,31) |
| ($\alpha_{min},\alpha_{max}$) | (0.1,2) |
| Value of $\alpha$ in Embodiment 1 | 0.6 |
| Channel BW | 20MHz |
| GI | 1.6 microseconds ($\mu$s) |
| Number of RA-RUs allocated to associated STAs (AID=0) | $N_{RU}$-1 |
| Number of RA-RUs allocated to unassociated STAs (AID=2045) | 1 |
| Number of associated STAs | [10:10:100] |
| Number of unassociated STAs | 5 |
| MAC protocol data unit (MPDU) | 2000 bytes |

A curve diagram illustrating probabilities of successful UL TB PPDU transmission of different numbers of STAs under the existing UORA mechanism, the UORA mechanism in Embodiment 1, and the UORA mechanism in Embodiment 2 is obtained through simulation. It can be seen through comparison that the STA transmission success rate under the embodiments of the disclosure is higher than the probability of successful UL TB PPDU transmission completed under the existing UORA mechanism. Under the UORA mechanism in Embodiment 1, the probability of successful STA transmission is increased by about 0.05 compared with the existing UORA mechanism. Under the UORA mechanism in Embodiment 2, the probability of successful STA transmission is increased by 3 decibels (dB) compared with the existing UORA mechanism. In addition, the UORA mechanism in Embodiment 2 also has good performance for the case where the total number of STAs is large.

In Embodiment 1, the first coefficient $\alpha$ is delivered to each STA by the AP. In each round of UORA mechanism, no matter whether the last round of RA-RU contention of the STAs is successful, each STA determines a target backoff value based on the same target coefficient. In addition, it is found through simulation that a smaller value of the first coefficient $\alpha$ leads to a higher probability of successful STA transmission. However, if the first coefficient is set to be very small, decrease of the count value of the OBO counter in each round will be slow, which reduces efficiency of the UORA mechanism. Therefore, an appropriate first coefficient needs to be selected to take into account both the probability of successful STA

13

transmission and efficiency of the UORA mechanism.

In Embodiment 2, the STA adaptively adjusts the first coefficient according to a UORA contention result of this round or UORA contention results of the most recent several rounds, that is, in each round of UORA contention, the values of the first coefficient $\alpha$ applied to the STAs may be different.

In addition, an RU size and an RU type of the following 6 cases are also simulated according to Embodiment 2.

Case 1: [26 26 26 26 26 26 26 26 26], $N_{RU}$=9, where the nine RUs are all 26-tone RUs.

Case 2: [26 26 26 26 26 26 26 52], $N_{RU}$=8, where there are seven 26-tone RUs and one 52-tone RU.

Case 3: [26 26 26 26 26 52 52], $N_{RU}$=7, where there are five 26-tone RUs and two 52-tone RUs.

Case 4: [26 26 26 52 52 52], $N_{RU}$=6, where there are three 26-tone RUs and three 52-tone RUs.

Case 5: [26 52 52 52 52], $N_{RU}$=5, where there is one 26-tone RU and four 52-tone RUs.

Case 6: [26 26 26 26], $N_{RU}$=4, where the four RUs are 26-tone RUs.

Each 26-tone RU has 24 data tones and 2 pilot tones. Each 52-tone RU has 48 data tones and 4 pilot tones. In each case, the last RU is allocated to unassociated STAs, and the first $N_{RU}$-1 STAs are allocated to associated STAs.

The simulation results are illustrated in Table 2. It can be seen that when the total number of STAs is 25, by adopting the solution proposed in the disclosure, it is possible to increase the probability of successful transmission up to about 6 dB compared with UORA in the standard. When the total number of STAs is greater than or equal to 75, the probability of successful transmission under UORA in the standard is almost 0, while the probability of successful STA transmission under the UORA mechanism in Embodiment 2 is increased to about 0.4.

Table 2

| Total number of STAs (associated STA+unassociated STA) | | 10+5 | 20+5 | 30+5 | 40+5 | 50+5 | 60+5 | 70+5 | 80+5 | 90+5 | 100+ 5 |
|---|---|---|---|---|---|---|---|---|---|---|---|
| Success rate in case 1 | Existing UORA mechanism | 0.272 2 | 0.152 4 | 0.087 1 | 0.049 4 | 0.027 6 | 0.015 0 | 0.008 2 | 0.004 5 | 0.002 2 | 0.001 3 |
| | Embodiment 2 | 0.718 9 | 0.625 9 | 0.559 8 | 0.506 4 | 0.460 8 | 0.424 3 | 0.395 9 | 0.367 1 | 0.340 1 | 0.318 4 |
| Success rate in case 2 | Existing UORA mechanism | 0.271 5 | 0.151 2 | 0.087 1 | 0.048 8 | 0.027 6 | 0.015 1 | 0.008 | 0.004 4 | 0.002 4 | 0.001 3 |
| | Embodiment 2 | 0.718 7 | 0.624 1 | 0.556 2 | 0.507 4 | 0.461 1 | 0.426 0 | 0.394 8 | 0.365 8 | 0.341 4 | 0.319 1 |
| Success rate in case 3 | Existing UORA mechanism | 0.271 3 | 0.152 6 | 0.087 7 | 0.049 2 | 0.028 6 | 0.015 0 | 0.008 1 | 0.004 3 | 0.002 3 | 0.001 3 |
| | Embodiment 2 | 0.719 5 | 0.623 9 | 0.557 4 | 0.505 4 | 0.464 1 | 0.425 0 | 0.393 4 | 0.366 5 | 0.343 3 | 0.318 4 |
| Success rate in case 4 | Existing UORA mechanism | 0.273 5 | 0.152 0 | 0.087 7 | 0.049 0 | 0.027 8 | 0.015 2 | 0.008 3 | 0.004 1 | 0.002 4 | 0.001 2 |
| | Embodiment2 | 0.716 8 | 0.625 1 | 0.558 3 | 0.506 6 | 0.460 4 | 0.427 2 | 0.392 4 | 0.364 9 | 0.343 2 | 0.317 8 |
| Success rate in case 5 | Existing UORA mechanism | 0.274 2 | 0.151 9 | 0.086 5 | 0.048 8 | 0.027 7 | 0.015 5 | 0.008 5 | 0.004 5 | 0.002 3 | 0.001 3 |
| | Embodiment 2 | 0.718 0 | 0.625 9 | 0.559 1 | 0.507 0 | 0.462 2 | 0.426 6 | 0.394 2 | 0.365 5 | 0.341 7 | 0.320 6 |
| Success rate in case 6 | Existing UORA mechanism | 0.269 2 | 0.152 6 | 0.0876 | 0.049 3 | 0.027 7 | 0.015 1 | 0.008 3 | 0.004 4 | 0.002 2 | 0.001 4 |
| | Embodiment 2 | 0.716 9 | 0.623 4 | 0.559 6 | 0.504 2 | 0.464 5 | 0.423 9 | 0.393 3 | 0.365 5 | 0.342 5 | 0.318 6 |

As can be seen, in embodiments of the disclosure, the STA can determine the target backoff value for RA-RU contention based on the target coefficient, that is, the STA can be controlled based on the target coefficient to contend for an RA-RU at an appropriate step size, so that the probability of RA-RU access can be increased or decreased according to the target coefficient, which can alleviate collision between STAs, thereby improving a success rate of random access.

The method embodiments of the disclosure are described in detail above with reference to FIG. 4 to FIG. 13, and the apparatus embodiments of the disclosure are described in detail below with reference to FIG. 14 to FIG. 18. It may be understood that the apparatus embodiments and the method embodiments correspond to each other, and for similar illustration, reference can be made to the method embodiments.

FIG. 14 is a schematic block diagram of an STA 400 according to embodiments of the disclosure. As illustrated in FIG. 14, the STA 400 includes a processing unit 410. The processing unit 410 is configured to: determine a target backoff value based on a count value of an OBO counter, a target coefficient, and a first RU number, where the first RU number is the number of RUs allocated to the STA by an AP; and contending for an RA-RU based on an OBO mechanism according to the target backoff value.

In some embodiments, the target coefficient includes a first coefficient and/or a second coefficient, the first coefficient is used for controlling the number of RUs used for calculating the target backoff value, and the second coefficient is used for controlling a target count value used for calculating the target backoff value.

In some embodiments, the first coefficient and the first RU number are used for determining a target RU number, and the target backoff value is determined according to the count value of the OBO counter and the target RU number.

In some embodiments, the target backoff value is equal to a value obtained by subtracting the target RU number from the count value of the OBO counter.

In some embodiments, the target RU number is equal to a product of the first coefficient and the first RU number.

In some embodiments, the second coefficient and the count value of the OBO counter are used for determining a target count value, and the target backoff value is determined according to the target count value and the first RU number.

In some embodiments, the target backoff value is equal to a value obtained by subtracting the first RU number from the target count value.

In some embodiments, the target count value is equal to a product of the second coefficient and the count value of the OBO counter.

In some embodiments, the target coefficient is obtained from the AP.

In some embodiments, the target coefficient is obtained via a trigger frame.

In some embodiments, the target coefficient is carried in a common information field in the trigger frame.

In some embodiments, the common information field in the trigger frame includes a target coefficient field, the target coefficient field indicates the target coefficient.

In some embodiments, the target coefficient is carried in a user information field in the trigger frame.

In some embodiments, each user information field in the trigger frame includes a target coefficient field, and the target coefficient field indicates a target coefficient applicable to an STA corresponding to the user information field.

In some embodiments, the target coefficient is determined by the STA.

In some embodiments, the processing unit 410 is further configured to: obtain a target number of STAs participating in UORA; and determine the target coefficient according to the target number.

In some embodiments, the target number includes associated STAs participating in UORA; or the target number includes unassociated STAs and associated STAs participating in UORA.

In some embodiments, the target number is obtained from the AP.

In some embodiments, the target number is obtained via a trigger frame.

In some embodiments, the target number is carried in a common information field in the trigger frame.

In some embodiments, the target number is carried in a user information field in the trigger frame.

In some embodiments, the target number is carried in a user information field corresponding to an associated STA in the trigger frame, or the target number is carried in a user information field corresponding to an associated STA and a user information field corresponding to an unassociated STA in the trigger frame.

In some embodiments, the trigger frame includes multiple first user information fields, STAs indicated by the multiple first user information fields are associated STAs, each of the multiple first user information fields includes a target number field, and the target number fields in the multiple first user information fields jointly indicate the target number.

In some embodiments, the trigger frame includes multiple first user information fields and multiple second user information fields, STAs indicated by the multiple first user information fields are associated STAs, and STAs indicated by the multiple second user information fields are unassociated STAs. Each of the multiple first user information fields includes a target number field, and the target number fields in the multiple first user information fields jointly indicate the target number. Each of the multiple second user information fields includes a target number field, and the target number fields in the multiple second user information fields jointly indicate the target number.

In some embodiments, the target coefficient is determined according to the target number as follows. The target coefficient is determined according to the target number and history access result information.

In some embodiments, the history access result information includes at least one of: whether collision occurred in the most recent N UL transmissions; a probability of collisions occurred in the most recent M UL transmissions; or a probability that no collision occurred in the most recent K UL transmissions; where N, M, and K are positive integers.

In some embodiments, the processing unit 410 is further configured to: according to the history random access information and the target number, determine an adjustment direction and an adjustment amount of the first coefficient and/or an adjustment direction and an adjustment amount of the second coefficient, where the adjustment direction of the first coefficient is to increase the first coefficient or to decrease the first coefficient, and the adjustment direction of the second coefficient is to increase the second coefficient or to decrease the second coefficient.

In some embodiments, the processing unit 410 is further configured to: increase a value of the first coefficient and/or decrease a value of the second coefficient if a first condition is satisfied; or decrease the value of the first coefficient and/or increase the value of the second coefficient if a second condition is satisfied.

In some embodiments, the first condition includes at least one of: no collision occurred in the most recent N UL transmissions; the number of collisions occurred in the most recent N UL transmissions is less than a first count threshold; the probability of collisions occurred in the most recent M UL transmissions is less than a first probability threshold; or the probability that no collision occurred in the most recent K UL transmissions is greater than a second probability threshold.

In some embodiments, the second condition includes at least one of: collision occurred in the most recent N UL transmissions; the number of collisions occurred in the most recent N UL transmissions is greater than a first count threshold; the probability of collisions occurred in the most recent M UL transmissions is greater than a first probability threshold; or the probability that no collision occurred in the most recent K UL transmissions is less than a second probability threshold.

In some embodiments, the adjustment amount of the first coefficient is determined according to the target number.

In some embodiments, when it is determined to increase the first coefficient, the first coefficient after adjustment satisfies the following formula:

$$\alpha' = \alpha_1 + \frac{N_{sta}}{100 + N_{sta}} \times inc$$
$$\alpha = \min(\alpha', \alpha_{max})$$

where $\alpha$ is a value of the first coefficient after adjustment, $\alpha_1$ is a value of the first coefficient before adjustment, $N_{sta}$ is the target number, inc is a step size for adjusting the first coefficient, and $\alpha_{max}$ is a maximum value of the first coefficient.

In some embodiments, the adjustment amount of the first coefficient is determined according to the target number and the number of consecutive successful UL transmissions completed by the STA.

In some embodiments, when it is determined to decrease the first coefficient, the first coefficient after adjustment satisfies the following formula:

$$\alpha' = \alpha_1 - \frac{200 + N_{sta}}{N_{sta}} \times dec^{n_s - 1}$$
$$\alpha = \min(\alpha', \alpha_{max})$$

where $\alpha$ is a value of the first coefficient after adjustment, $\alpha_1$ is a value of the first coefficient before adjustment, $N_{sta}$ is the target number, dec is a step size for adjusting the first coefficient, ns is number of consecutive successful UL transmissions completed by the STA, and $\alpha_{max}$ is a maximum value of the first coefficient.

Optionally, in some embodiments, the processing unit may be one or more processors.

It may be understood that, the STA 400 according to embodiments of the disclosure may correspond to the STA in the method embodiments of the disclosure, and the foregoing and other operations and/or functions of various units in the STA 400 are respectively intended to implement corresponding processes of the STA in the method 200 illustrated in FIG. 4 to FIG. 13, which are not described herein again for brevity.

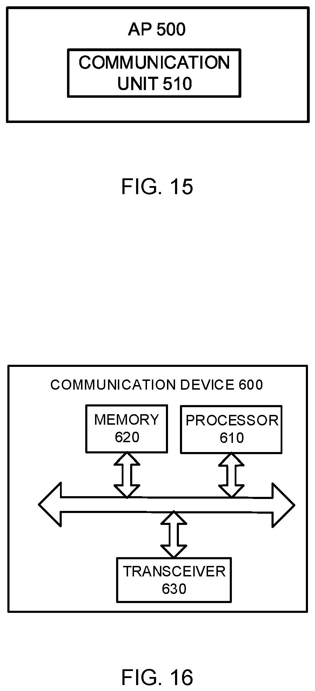

FIG. 15 is a schematic block diagram of an AP according to embodiments of the disclosure. The AP 500 in FIG. 15 includes a communication unit 510. The communication unit 510 is configured to transmit first information to an STA, where the first information is used for determining a target coefficient, and the target coefficient is used for determining a target backoff value for contending for an RA-RU based on an OBO mechanism.

In some embodiments, the first information includes the target coefficient; and a count value of an OBO counter, the target coefficient, and a first RU number are used for determining the target backoff value, where the first RU number is the number of RUs allocated to the STA by the AP.

In some embodiments, the target coefficient includes a first coefficient and/or a second coefficient, the first coefficient is used for controlling the number of RUs used for calculating the target backoff value, and the second coefficient is used for controlling a target count value used for calculating the target backoff value.

In some embodiments, the first coefficient and the first RU number are used for determining a target RU number, and the target backoff value is determined according to the count value of the OBO counter and the target RU number.

In some embodiments, the target backoff value is equal to a value obtained by subtracting the target RU number from the count value of the OBO counter.

In some implementations, the target RU number is equal to a product of the first coefficient and the first RU number.

In some embodiments, the second coefficient and the count value of the OBO counter are used for determining a target count value, and the target backoff value is determined according to the target count value and the first RU number.

In some embodiments, the target backoff value is equal to a value obtained by subtracting the first RU number from the target count value.

In some embodiments, the target count value is equal to a product of the second coefficient and the count value of the OBO counter.

In some embodiments, the target coefficient is obtained via a trigger frame.

In some embodiments, the target coefficient is carried in a common information field in the trigger frame.

In some embodiments, the common information field in the trigger frame includes a target coefficient field, the target coefficient field indicates the target coefficient.

In some embodiments, the target coefficient is carried in a user information field in the trigger frame.

In some embodiments, each user information field in the trigger frame includes a target coefficient field, and the target coefficient field indicates a target coefficient applicable to an STA corresponding to the user information field.

In some embodiments, the first information includes a target number, where the target number is the number of STAs participating in UORA.

In some embodiments, the target number includes associated STAs participating in UORA; or the target number includes unassociated STAs and associated STAs participating in UORA.

In some embodiments, the target number is obtained from the AP.

In some embodiments, the target number is obtained via a trigger frame.

In some embodiments, the target number is carried in a common information field in the trigger frame.

In some embodiments, the target number is carried in a user information field in the trigger frame.

In some embodiments, the target number is carried in a user information field corresponding to an associated STA in the trigger frame, or the target number is carried in a user information field corresponding to an associated STA and a user information field corresponding to an unassociated STA in the trigger frame.

In some embodiments, the trigger frame includes multiple first user information fields, STAs indicated by the multiple first user information fields are associated STAs, each of the multiple first user information fields includes a target number field, and the target number fields in the multiple first user information fields jointly indicate the target number.

In some embodiments, the trigger frame includes multiple first user information fields and multiple second user information fields, STAs indicated by the multiple first user information fields are associated STAs, and STAs indicated by the multiple second user information fields are unassociated STAs. Each of the multiple first user information fields includes a target number field, and the target number fields in the multiple first user information fields jointly indicate the target number. Each of the multiple second user information fields includes a target number field, and the target number fields in the multiple second user information fields jointly indicate the target number.

Optionally, in some embodiments, the communication unit may be a communication interface or a transceiver, or an input/output interface of a communication chip or a system-on-chip (SOC). It may be understood that, the AP 500 according to embodiments of the disclosure may correspond to the AP in the method embodiments of the disclosure, and the foregoing and other operations and/or functions of various units in the AP 500 are respectively intended to implement corresponding processes of the AP in the method 200 illustrated in FIG. 4 to FIG. 13, which are not described herein again for brevity.

FIG. 16 is a schematic structural diagram of a communication device 600 provided in embodiments of the disclosure. The communication device 600 illustrated in FIG. 16 may include a processor 610. The processor 610 may invoke and execute computer programs from a memory, so as to implement the method in embodiments of the disclosure.

Optionally, as illustrated in FIG. 16, the communication device 600 may further include a memory 620. The processor 610 can invoke and execute computer programs stored in the memory 620, to perform the method in embodiments of the disclosure.

The memory 620 may be a separate device independent of the processor 610, or may be integrated into the processor 610.

As illustrated in FIG. 16, the communication device 600 may further include a transceiver 630. The processor 610 can control the transceiver 630 to communicate with other devices, specifically, to transmit information or data to other devices or to receive information or data transmitted by other devices.

The transceiver 630 may include a transmitter and a receiver. The transceiver 630 may further include an antenna, where one or more antennas can be provided.

Optionally, the communication device 600 may be operable as the AP in embodiments of the disclosure, and the communication device 600 can implement the operations performed by the AP in various methods in embodiments of the disclosure, which will not be described again herein for the sake of brevity.

Optionally, the communication device 600 may be operable as the STA in embodiments of the disclosure, and the communication device 600 can implement the operations performed by the STA in various methods in embodiments of the disclosure, which will not be described again herein for the sake of brevity.

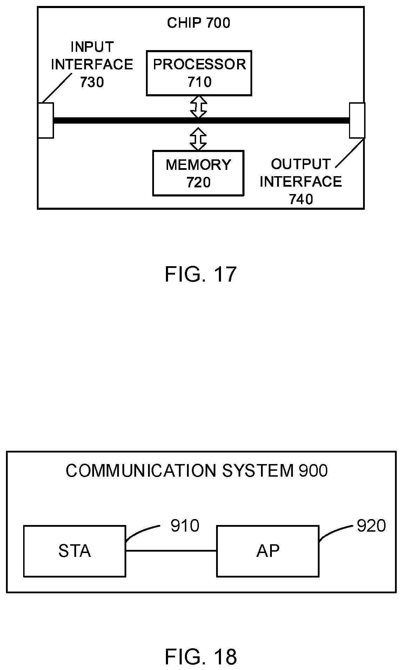

FIG. 17 is a schematic structural diagram of a chip 700 according to embodiments of the disclosure. The chip 700 illustrated in FIG. 17 includes a processor 710. The processor 710 may invoke and execute computer programs from a memory, so as to implement the method in embodiments of the disclosure.

Optionally, as illustrated in FIG. 17, the chip 700 may further include a memory 720. The processor 710 can invoke and execute computer programs stored in the memory 720 to perform the method in embodiments of the disclosure.

The memory 720 may be a separate device independent of the processor 710, or may be integrated into the processor 710.

Optionally, as illustrated in FIG. 17, the chip 700 may further include an input interface 730. The processor 710 may control the input interface 730 to communicate with other devices or chips, and specifically, may obtain information or data transmitted by other devices or chips.

Optionally, as illustrated in FIG. 17, the chip 700 may further include an output interface 740. The processor 710 may control the output interface 740 to communicate with other devices or chips, and specifically, may output information or data to other devices or chips.

Optionally, the chip 700 may be applied to the AP in embodiments of the disclosure, that is, the chip may implement corresponding operations implemented by the AP in various methods in embodiments of the disclosure, which will not be described again herein for the sake of brevity.

Optionally, the chip 700 may be applied to the STA in embodiments of the disclosure, that is, the chip may implement corresponding operations implemented by the STA in various methods in embodiments of the disclosure, which will not be described again herein for the sake of brevity.

It may be understood that, the chip described in embodiments of the disclosure may also be referred to as an SOC or the like.

FIG. 18 is a schematic block diagram of a communication system 900 provided in embodiments of the disclosure. As illustrated in FIG. 18, the communication system 900 includes an STA 910 and an AP 920.

The STA 910 may be configured to implement corresponding functions implemented by the STA in the foregoing method, and the AP 920 may be configured to implement corresponding functions implemented by the AP in the foregoing method, which are not described again herein for brevity.

It may be understood that, the processor in embodiments of the disclosure may be an integrated circuit chip with signal processing capabilities. During implementation, each step of the foregoing method embodiments may be completed by an integrated logic circuit of hardware in the processor or an instruction in the form of software. The processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor may be a microprocessor, or the processor may be any conventional processor or the like. The steps of the method disclosed in embodiments of the disclosure may be directly implemented by a hardware decoding processor, or may be performed by hardware and software modules in the decoding processor. The software module can be located in a storage medium such as a random access memory (RAM), a flash memory, a read only memory (ROM), a programmable ROM (PROM), or an electrically erasable programmable memory, registers, and the like. The storage medium is located in the memory. The processor reads the information in the memory, and completes the steps of the method described above with the hardware thereof.

It can be understood that, the memory in embodiments of the disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It may be noted that, the memory of the systems and methods described in the disclosure is intended to include, but is not limited to, these and any other suitable types of memory.

It may be understood that, the memory above is intended for illustration rather than limitation. For example, the memory in embodiments of the disclosure may also be an SRAM, a DRAM, an SDRAM, a DDR SDRAM, an ESDRAM, an SLDRAM, a DR RAM, etc. In other words, the memory in embodiments of the disclosure is intended to include, but is not limited to, these and any other suitable types of memory.

Embodiments of the disclosure further provide a computer-readable storage medium. The computer-readable storage medium is configured to store computer programs.

Optionally, the computer-readable storage medium may be applied to the AP in embodiments of the disclosure, and the computer programs are operable with a computer to execute corresponding operations implemented by the AP in various methods in embodiments of the disclosure, which will not be described again herein for the sake of brevity.

Optionally, the computer-readable storage medium may be applied to the STA in embodiments of the disclosure, and the computer programs are operable with a computer to execute corresponding operations implemented by the STA in various methods in embodiments of the disclosure, which will not be described again herein for the sake of brevity.

Embodiments of the disclosure further provide a computer program product. The computer program product includes computer program instructions.

Optionally, the computer program product may be applied to the AP in embodiments of the disclosure, and the computer program instructions are operable with a computer to execute corresponding operations implemented by the AP in various methods in embodiments of the disclosure, which will not be described again herein for the sake of brevity.

Optionally, the computer program product may be applied to the STA in embodiments of the disclosure, and the computer program instructions are operable with a computer to execute corresponding operations implemented by the STA in various methods in embodiments of the disclosure, which will not be described again herein for the sake of brevity.

Embodiments of the disclosure further provide a computer program.

Optionally, the computer program may be applied to the AP in embodiments of the disclosure. The computer program, when executed by a computer, is operable to implement corresponding operations implemented by the AP in various methods in embodiments of the disclosure, which will not be described again herein for the sake of brevity.

Optionally, the computer program may be applied to the STA in embodiments of the disclosure. The computer program, when executed by a computer, is operable to implement corresponding operations implemented by the STA in various methods in embodiments of the disclosure, which will not be described again herein for the sake of brevity.

Those of ordinary skill in the art will appreciate that units and algorithmic operations of various examples described in connection with embodiments of the disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the related art, or part of the technical solution of the disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the disclosure. The above storage medium may include various kinds of media that can store program codes, such as a universal serial bus (USB) flash disk, a mobile hard drive, a ROM, a RAM, a magnetic disk, or an optical disk.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

**Claims**

1. A method for wireless communication, comprising:

   determining, by a station (STA), a target backoff value based on a count value of an orthogonal frequency division multiple access (OFDMA) backoff (OBO) counter, a target coefficient, and a first resource unit (RU) number, wherein the first RU number is the number of RUs allocated to the STA by an access point (AP); and contending for a random access-RU (RA-RU) based on an OBO mechanism according to the target backoff value.

2. The method of claim 1, wherein the target coefficient comprises a first coefficient and/or a second coefficient, the first coefficient is used for controlling the number of RUs used for calculating the target backoff value, and the second coefficient is used for controlling a target count value used for calculating the target backoff value.

3. The method of claim 2, wherein the first coefficient and the first RU number are used for determining a target RU number, and the target backoff value is determined according to the count value of the OBO counter and the target RU number.

4. The method of claim 3, wherein the target backoff value is equal to a value obtained by subtracting the target RU number from the count value of the OBO counter.

5. The method of claim 3 or 4, wherein the target RU number is equal to a product of the first coefficient and the first RU number.

6. The method of any one of claims 2 to 5, wherein the second coefficient and the count value of the OBO counter are used for determining a target count value, and the target backoff value is determined according to the target count value and the first RU number.

7. The method of claim 6, wherein the target backoff value is equal to a value obtained by subtracting the first RU number from the target count value.

8. The method of claim 6 or 7, wherein the target count value is equal to a product of the second coefficient and the count value of the OBO counter.

9. The method of any one of claims 1 to 8, wherein the target coefficient is obtained from the AP.

10. The method of any one of claims 1 to 9, wherein the target coefficient is obtained via a trigger frame.

11. The method of claim 10, wherein the target coefficient is carried in a common information field in the trigger frame.

12. The method of claim 11, wherein the common information field in the trigger frame comprises a target coefficient field, and the target coefficient field indicates the target coefficient.

13. The method of claim 10, wherein the target coefficient is carried in a user information field in the trigger frame.

14. The method of claim 13, wherein each user information field in the trigger frame comprises a target coefficient field, and the target coefficient field indicates a target coefficient applicable to an STA corresponding to the user information field.

15. The method of any one of claims 1 to 8, where the target coefficient is determined by the STA.

16. The method of claim 15, further comprising:

    obtaining a target number of STAs participating in uplink (UL) OFDMA-based random access (UORA); and determining the target coefficient according to the target number.

**17.** The method of claim 16, where the target number comprises associated STAs participating in UORA; or the target number comprises unassociated STAs and associated STAs participating in UORA.

**18.** The method of claim 16 or 17, wherein the target number is obtained from the AP.

**19.** The method of any of claims 16 to 18, where the target number is obtained via a trigger frame.

**20.** The method of claim 19, wherein the target number is carried in a common information field in the trigger frame.

**21.** The method of claim 19, wherein the target number is carried in a user information field in the trigger frame.

**22.** The method of claim 21, wherein the target number is carried in a user information field corresponding to an associated STA in the trigger frame, or the target number is carried in a user information field corresponding to an associated STA and a user information field corresponding to an unassociated STA in the trigger frame.

**23.** The method of claim 22, where the trigger frame comprises a plurality of first user information fields, STAs indicated by the plurality of first user information fields are associated STAs, each of the plurality of first user information fields comprises a target number field, and the target number fields in the plurality of first user information fields jointly indicate the target number.

**24.** The method of claim 22, wherein the trigger frame comprises a plurality of first user information fields and a plurality of second user information fields, STAs indicated by the plurality of first user information fields are associated STAs, and STAs indicated by the plurality of second user information fields are unassociated STAs, wherein

　　each of the plurality of first user information fields comprises a target number field, and the target number fields in the plurality of first user information fields jointly indicate the target number; and
　　each of the plurality of second user information fields comprises a target number field, and the target number fields in the plurality of second user information fields jointly indicate the target number.

**25.** The method of any one of claims 16 to 24, wherein determining the target coefficient according to the target number comprises:
determining the target coefficient according to the target number and history access result information.

**26.** The method of claim 25, wherein the history access result information comprises at least one of:

　　whether collision occurred in the most recent N UL transmissions;
　　a probability of collisions occurred in the most recent M UL transmissions; or
　　a probability that no collision occurred in the most recent K UL transmissions;
　　wherein N, M, and K are positive integers.

**27.** The method of claim 25 or 26, wherein determining the target coefficient according to the target number and the history access result comprises:
according to the history random access information and the target number, determining an adjustment direction and an adjustment amount of the first coefficient and/or an adjustment direction and an adjustment amount of the second coefficient, wherein the adjustment direction of the first coefficient is to increase the first coefficient or to decrease the first coefficient, and the adjustment direction of the second coefficient is to increase the second coefficient or to decrease the second coefficient.

**28.** The method of claim 27, wherein determining the adjustment direction and the adjustment amount of the first coefficient and/or the adjustment direction and the adjustment amount of the second coefficient according to the history random access information and the target number comprises:

　　increasing a value of the first coefficient and/or decreasing a value of the second coefficient when a first condition is satisfied; or
　　decreasing the value of the first coefficient and/or increasing the value of the second coefficient when a second condition is satisfied.

**29.** The method of claim 28, where the first condition comprises at least one of:

no collision occurred in the most recent N **UL** transmissions;

the number of collisions occurred in the most recent N **UL** transmissions is less than a first count threshold;

the probability of collisions occurred in the most recent M **UL** transmissions is less than a first probability threshold; or

the probability that no collision occurred in the most recent K **UL** transmissions is greater than a second probability threshold.

30. The method of claim 28, where the second condition comprises at least one of:

collision occurred in the most recent N **UL** transmissions;

the number of collisions occurred in the most recent N **UL** transmissions is greater than a first count threshold;

the probability of collisions occurred in the most recent M **UL** transmissions is greater than a first probability threshold; or

the probability that no collision occurred in the most recent K **UL** transmissions is less than a second probability threshold.

31. The method of any one of claims 27 to 30, wherein the adjustment amount of the first coefficient is determined according to the target number.

32. The method of claim 31, wherein when it is determined to increase the first coefficient, the first coefficient after adjustment satisfies the following formula:

$$\alpha' = \alpha_1 + \frac{N_{sta}}{100 + N_{sta}} \times inc$$

$$\alpha = \min(\alpha', \alpha_{\max})$$

wherein $\alpha$ is a value of the first coefficient after adjustment, $\alpha_1$ is a value of the first coefficient before adjustment, $N_{sta}$ is the target number, *inc* is a step size for adjusting the first coefficient, and $\alpha_{\max}$ is a maximum value of the first coefficient.

33. The method of any one of claims 27 to 30, where the adjustment amount of the first coefficient is determined according to the target number and the number of consecutive successful UL transmissions completed by the STA.

34. The method of claim 33, wherein when it is determined to decrease the first coefficient, the first coefficient after adjustment satisfies the following formula:

$$\alpha' = \alpha_1 - \frac{200 + N_{sta}}{N_{sta}} \times dec^{n_s - 1}$$

$$\alpha = \min(\alpha', \alpha_{\max})$$

wherein $\alpha$ is a value of the first coefficient after adjustment, $\alpha_1$ is a value of the first coefficient before adjustment, $N_{sta}$ is the target number, dec is a step size for adjusting the first coefficient, $n_s$ is number of consecutive successful UL transmissions completed by the STA, and $\alpha_{\max}$ is a maximum value of the first coefficient.

35. A method for wireless communication, comprising:
transmitting, by an access point (AP), first information to a station (STA), wherein the first information is used for determining a target coefficient, and the target coefficient is used for determining a target backoff value for contending for a random access-resource unit (RA-RU) based on an orthogonal frequency division multiple access (OFDMA) backoff (OBO) mechanism.

36. The method of claim 35, wherein the first information comprises the target coefficient, and a count value of an OBO counter, the target coefficient, and a first RU number are used for determining the target backoff value, wherein the first RU number is the number of RUs allocated to the STA by the AP.

37. The method of claim 36, wherein the target coefficient comprises a first coefficient and/or a second coefficient, the first coefficient is used for controlling the number of RUs used for calculating the target backoff value, and the second coefficient is used for controlling a target count value used for calculating the target backoff value.

38. The method of claim 37, wherein the first coefficient and the first RU number are used for determining a target RU number, and the target backoff value is determined according to the count value of the OBO counter and the target RU number.

39. The method of claim 38, wherein the target backoff value is equal to a value obtained by subtracting the target RU number from the count value of the OBO counter.

40. The method of claim 38 or 39, wherein the target RU number is equal to a product of the first coefficient and the first RU number.

41. The method of any one of claims 37 to 40, wherein the second coefficient and the count value of the OBO counter are used for determining a target count value, and the target backoff value is determined according to the target count value and the first RU number.

42. The method of claim 41, wherein the target backoff value is equal to a value obtained by subtracting the first RU number from the target count value.

43. The method of claim 41 or 42, wherein the target count value is equal to a product of the second coefficient and the count value of the OBO counter.

44. The method of any one of claims 36 to 43, wherein the target coefficient is obtained via a trigger frame.

45. The method of claim 44, wherein the target coefficient is carried in a common information field in the trigger frame.

46. The method of claim 45, wherein the common information field in the trigger frame comprises a target coefficient field, and the target coefficient field indicates the target coefficient.

47. The method of claim 44, wherein the target coefficient is carried in a user information field in the trigger frame.

48. The method of claim 47, wherein each user information field in the trigger frame comprises a target coefficient field, and the target coefficient field indicates a target coefficient applied to an STA corresponding to the user information field.

49. The method of any one of claims 35 to 48, wherein the first information comprises a target number, and the target number is the number of STAs participating in uplink (UL) OFDMA-based random access (UORA).

50. The method of claim 49, wherein the target number comprises associated STAs participating in UORA; or the target number comprises unassociated STAs and associated STAs participating in UORA.

51. The method of claim 49 or 50, wherein the target number is obtained from the AP.

52. The method of any one of claims 49 to 51, wherein the target number is obtained via a trigger frame.

53. The method of claim 52, wherein the target number is carried in a common information field in the trigger frame.

54. The method of claim 52, wherein the target number is carried in a user information field in the trigger frame.

55. The method of claim 54, wherein the target number is carried in a user information field corresponding to an associated STA in the trigger frame, or the target number is carried in a user information field corresponding to an associated STA and a user information field corresponding to an unassociated STA in the trigger frame.

56. The method of claim 55, wherein the trigger frame comprises a plurality of first user information fields, STAs indicated by the plurality of first user information fields are associated STAs, each of the plurality of first user information fields comprises a target number field, and the target number fields in the plurality of first user information fields jointly indicate the target number.

**57.** The method of claim 55, wherein the trigger frame comprises a plurality of first user information fields and a plurality of second user information fields, STAs indicated by the plurality of first user information fields are associated STAs, and STAs indicated by the plurality of second user information fields are unassociated STAs, wherein

each of the plurality of first user information fields comprises a target number field, and the target number fields in the plurality of first user information fields jointly indicate the target number; and
each of the plurality of second user information fields comprises a target number field, and the target number fields in the plurality of second user information fields jointly indicate the target number.

**58.** A station (STA), comprising:
a processing unit configured to:

determine a target backoff value based on a count value of an orthogonal frequency division multiple access (OFDMA) backoff (OBO) counter, a target coefficient, and a first resource unit (RU) number, wherein the first RU number is the number of RUs allocated to the STA by an access point (AP); and
contend for a random access-RU (RA-RU) based on an OBO mechanism according to the target backoff value.

**59.** An access point (AP), comprising:
a communication unit configured to transmit first information to a station (STA), wherein the first information is used for determining a target coefficient, and the target coefficient is used for determining a target backoff value for contending for a random access-resource unit (RA-RU) based on an orthogonal frequency division multiple access (OFDMA) backoff (OBO) mechanism.

**60.** A station (STA), comprising:

a memory configured to store computer programs; and
a processor configured to invoke and execute the computer programs stored in the memory, to cause the STA to perform the method of any one of claims 1 to 34.

**61.** An access point (AP), comprising:

a memory configured to store computer programs; and
a processor configured to invoke and execute the computer programs stored in the memory, to cause the AP to perform the method of any one of claims 35 to 57.

**62.** A chip, comprising:
a processor configured to invoke and execute computer programs from a memory, to cause a device equipped with the chip to perform the method of any one of claims 1 to 34 or the method of any one of claims 35 to 57.

**63.** A computer-readable storage medium configured to store computer programs which are operable with a computer to perform the method of any one of claims 1 to 34 or the method of any one of claims 35 to 57.

**64.** A computer program product, comprising computer program instructions which are operable with a computer to perform the method of any one of claims 1 to 34 or the method of any one of claims 35 to 57.

**65.** A computer program, being operable with a computer to perform the method of any one of claims 1 to 34 or the method of any one of claims 35 to 57.

**FIG. 1**

| ELEMENT ID | LENGTH | ELEMENT ID EXTENSION | OCW RANGE |
|------------|--------|---------------------|-----------|

OCTETS:  1          1          1          1

| EOCWmin | EOCWmax | RESERVED |
|---------|---------|----------|

BITS:       3          3          2

FIG. 2

RU DISTRIBUTION: 24 24 24 24 24 24 24 48

FIG. 3

200

DETERMINE, BY STA, TARGET BACKOFF VALUE BASED ON COUNT VALUE OF OBO COUNTER, TARGET COEFFICIENT, AND FIRST RU NUMBER — S210

CONTEND FOR RA-RU BASED ON OBO MECHANISM ACCORDING TO TARGET BACKOFF VALUE — S220

FIG. 4

| TRIGGER TYPE | UL LENGTH | MORE TF | CS REQUIRED | UL BW | GI AND HE-LTF TYPE | MU-MIMO HE-LTF MODE | NUMBER OF HE-LTF SYMBOLS AND MID-AMBLE PERIODICITY |
|---|---|---|---|---|---|---|---|

B0 — B3 B4 — B15 B16 — B17 B18 B19 B20 B21 B22 B23 — B25

BITS 4 12 1 1 2 2 1 3

| UL STBC | LDPC EXTRA SYMBOL SEGMENT | AP TX POWER | PRE-FEC PADDING FACTOR | PE DISAMBIGUITY | UL SPECIAL REUSE | DOPPLER | FIRST COEFFICIENT | UL HE-SIG-A2 RESERVED | RESERVED |
|---|---|---|---|---|---|---|---|---|---|

B26 B27 B28 — B33 B34 — B35 B36 B37 — B52 B53 B54 B55 — B62 B63

BITS: 1 1 6 2 1 16 1 1 8 1

FIG. 5

EP 4 629 575 A1

EP 4 629 575 A1

| AID12 | RU ALLOCATION | UL FEC CODING TYPE | UL EHT-MCS | FIRST COEFFICIENT | SS ALLOCATION/ RA-RU INFORMATION | UL TARGET RSSI | PS160 | TRIGGER DEPENDENT USER INFORMATION |
|---|---|---|---|---|---|---|---|---|
| BITS: 12 | 8 | 1 | 4 | 1 | 6 | 7 | 1 | VARIABLE |

FIG. 6

FIG. 7

| B0 TRIGGER TYPE | B4 UL LENGTH | B16 MORE TF | B17 CS REQUIRED | B18 B19 UL BW | B20 B21 GI AND HE-LTF TYPE | B22 MU-MIMO HE-LTF MODE | B23 NUMBER OF HE-LTF SYMBOLS AND MID-AMBLE PERIODICITY B25 |
|---|---|---|---|---|---|---|---|
| BITS 4 | 12 | 1 | 1 | 2 | 2 | 1 | 3 |

| B26 UL STBC | B27 LDPC EXTRA SYMBOL SEGMENT | B28 AP TX POWER B33 | B34 PRE-FEC PADDING FACTOR B35 | B36 PE DISAMBIGUITY | B37 UL SPECIAL REUSE B52 | B53 DOPPLER | B54 TARGET NUMBER B56 | B57 UL HE-SIG-A2 RESERVED B62 | B63 RESERVED |
|---|---|---|---|---|---|---|---|---|---|
| BITS: 1 | 1 | 6 | 2 | 1 | 16 | 1 | 3 | 8 | 1 |

FIG. 8

| AID12 | RU ALLOCATION | UL FEC CODING TYPE | UL EHT-MCS | TARGET NUMBER | SS ALLOCATION/ RA-RU INFORMATION | UL TARGET RSSI | PS160 | TRIGGER DEPENDENT USER INFORMATION |
|---|---|---|---|---|---|---|---|---|
| BITS: 12 | 8 | 1 | 4 | 1 | 6 | 7 | 1 | VARIABLE |

FIG. 9

EP 4 629 575 A1

FIG. 10

```
                              ┌─────────┐
                              │  START  │
                              └─────────┘
                                   │
                                   ▼
            ┌──────────────────────────────────────┐
            │  STA INITIALIZES VALUE RANGE          │      S301
            │  OCW_min~OCW_max OF OCW, VALUE         │
            │  RANGE α_min~α_max OF α, AND           │
            │  INITIAL VALUE OF α                    │
            └──────────────────────────────────────┘
                                   │
                                   ▼
            ┌──────────────────────────────────────┐
            │  STA SELECTS RANDOMLY AN              │
            │  INTEGER FROM [0,OCW], AND SETS       │      S302
     ──────▶│  INITIAL COUNT VALUE OF OBO           │
     │      │  COUNTER TO BE THE SELECTED           │
     │      │  INTEGER                              │
     │      └──────────────────────────────────────┘
     │                             │
     │                             ▼
     │      ┌──────────────────────────────────────┐
     │      │  STA UPDATES VALUE OF OBO             │      S303
     │      │  COUNTER: OBO'=OBO-α*N_RU,            │
     │      │  OBO=OBO'                             │
     │      └──────────────────────────────────────┘
     │                             │
     │                             ▼         S304
     │       NO              ◇───────────────◇
     │◀──────────────────────  VALUE OBO OF OBO  ─
     │                       ◇ COUNTER OF STA ≤0? ◇
     │                        ◇───────────────◇
     │                               │ YES
     │                               ▼
     │      ┌──────────────────────────────────────┐
     │      │  STA COMPLETES BACKOFF               │      S305
     │      │  PROCEDURE, AND CAN SELECT           │
     │      │  RANDOMLY AN RU TO PERFORM           │
     │      │  TRANSMISSION                        │
     │      └──────────────────────────────────────┘
     │                               │
     │                               ▼
     │      ┌──────────────────────────────────────┐
     │      │  UPRATE α ACCORDING TO               │      S306
     │      │  TRANSMISSION RESULTS OF STA         │
     │      │  (COLLISION OR SUCCESS, THE NUMBER   │
     │      │  OF CONSECUTIVE SUCCESSFUL           │
     │      │  TRANSMISSIONS) AND VALUE OF N_STA   │
     │      └──────────────────────────────────────┘
     │                               │
     │                               ▼         S307
     │       YES             ◇───────────────◇
     └───────────────────────  PERFORM THE NEXT  ◇
                            ◇     ROUND OF       ◇
                             ◇ TRANSMISSION?    ◇
                              ◇───────────────◇
                                      │ NO
                                      ▼
                              ┌─────────┐
                              │   END   │
                              └─────────┘
```

FIG. 11

-

RU DISTRIBUTION FOR 20MHz: 24 24 24 24 24 24 24 48

EMBODIMENT 2

STA SUCCESS RATE

EXISTING UORA MECHANISM

EMBODIMENT 1

NUMBER OF STAs (NUMBER OF UNASSOCIATED STAs: 5)

FIG. 12

RU DISTRIBUTION FOR 20MHz: 24 24 24 24 24 24 24 24

FIG. 13

FIG. 14

AP 500

COMMUNICATION
UNIT 510

FIG. 15

COMMUNICATION DEVICE 600

MEMORY
620

PROCESSOR
610

TRANSCEIVER
630

FIG. 16

CHIP 700

INPUT
INTERFACE
730

PROCESSOR
710

MEMORY
720

OUTPUT
INTERFACE
740

FIG. 17

COMMUNICATION SYSTEM 900

STA

910

AP

920

FIG. 18

## INTERNATIONAL SEARCH REPORT

| International application No. |
|---|
| **PCT/CN2022/136204** |

| A. | CLASSIFICATION OF SUBJECT MATTER |
|---|---|

H04L27/00(2006.01)i

According to International Patent Classification (IPC) or to both national classification and IPC

| B. | FIELDS SEARCHED |
|---|---|

Minimum documentation searched (classification system followed by classification symbols)

IPC: H04L27/-

Documentation searched other than minimum documentation to the extent that such documents are included in the fields searched

Electronic data base consulted during the international search (name of data base and, where practicable, search terms used)

CNTXT; CNABS; VEN; DWPI; USTXT; EPTXT; WOTXT; 3GPP; IEEE; CNKI: 正交频分多址, 随机接入, 竞争, 窗口, 资源单元, 退避, 冲突, 碰撞, 干扰, 接入点, 站点, 节点, 系数, 因子, 权重, 数量, 计数器, 计数值, 参数, OFDMA, OURA, RA, RU, OBO, OCW, STA, AP, back off, counter, trigger frame, number, weight, coefficient, factor, collision, conflict, compet+, field

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107852742 A (CANON INC.) 27 March 2018 (2018-03-27)<br>description, paragraphs 0053-0091, 0139, 0148-0150, 0194-0196, and 0578-0588, and figures 9, 12, and 22 | 1-65 |
| A | CN 107105514 A (HUAWEI TECHNOLOGIES CO., LTD.) 29 August 2017 (2017-08-29)<br>entire document | 1-65 |
| A | CN 111328052 A (CHONGQING UNIVERSITY OF POSTS AND TELECOMMUNICATIONS) 23 June 2020 (2020-06-23)<br>entire document | 1-65 |
| A | CN 112469136 A (HUAWEI TECHNOLOGIES CO., LTD.) 09 March 2021 (2021-03-09)<br>entire document | 1-65 |
| A | WO 2017186587 A1 (CANON KABUSHIKI KAISHA et al.) 02 November 2017 (2017-11-02)<br>entire document | 1-65 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **24 August 2023** | **26 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

EP 4 629 575 A1

| Patent document cited in search report | | | Publication date (day/month/year) | Patent family member(s) | | | Publication date (day/month/year) |
|---|---|---|---|---|---|---|---|
| CN | 107852742 | A | 27 March 2018 | US | 2021274552 | A1 | 02 September 2021 |
| | | | | US | 2018199375 | A1 | 12 July 2018 |
| | | | | US | 10660129 | B2 | 19 May 2020 |
| | | | | GB | 201603515 | D0 | 13 April 2016 |
| | | | | GB | 2540450 | A | 18 January 2017 |
| | | | | GB | 2540450 | B | 28 March 2018 |
| | | | | WO | 2017005893 | A1 | 12 January 2017 |
| | | | | US | 2020245359 | A1 | 30 July 2020 |
| | | | | US | 11039476 | B2 | 15 June 2021 |
| | | | | GB | 2543583 | A | 26 April 2017 |
| | | | | GB | 2544824 | A | 31 May 2017 |
| | | | | GB | 2544825 | A | 31 May 2017 |
| | | | | GB | 2543583 | B | 16 May 2018 |
| | | | | GB | 2544825 | B | 30 May 2018 |
| | | | | GB | 2561677 | A | 24 October 2018 |
| | | | | GB | 2544824 | B | 16 January 2019 |
| | | | | GB | 2561677 | B | 18 March 2020 |
| | | | | CN | 107852742 | B | 06 August 2021 |
| | | | | CN | 113709895 | A | 26 November 2021 |
| CN | 107105514 | A | 29 August 2017 | None | | | |
| CN | 111328052 | A | 23 June 2020 | CN | 111328052 | B | 24 June 2022 |
| CN | 112469136 | A | 09 March 2021 | WO | 2021043292 | A1 | 11 March 2021 |
| | | | | US | 2022191923 | A1 | 16 June 2022 |
| WO | 2017186587 | A1 | 02 November 2017 | GB | 2549739 | A | 01 November 2017 |
| | | | | GB | 2549739 | B | 03 April 2019 |

Form PCT/ISA/210 (patent family annex) (July 2022)

42